# EUROPÄISCHE PATENTSCHRIFT

(11) **EP 3 107 799 B1**
(45) Veröffentlichungstag und Bekanntmachung des Hinweises auf die Patenterteilung: **11.09.2019**
(21) Anmeldenummer: 15717800.5
(22) Anmeldetag: 31.03.2015
(51) Int. Cl.: B62J 6/00, B62J 99/00, F21V 8/00

(54) **BELEUCHTUNGSEINRICHTUNG FÜR EIN ZUMINDEST TEILWEISE MUSKELBETRIEBENES FAHRZEUG MITTELS LICHTFÜHRELEMENTEN**
LIGHTING DEVICE FOR AN AT LEAST PARTIALLY MUSCLE DRIVEN VEHICLE BY MEANS OF LIGHT GUIDE ELEMENTS
DISPOSITIF D'ÉCLAIRAGE POUR UN VÉHICULE PROPULSÉ AU MOINS EN PARTIE PAR LA FORCE MUSCULAIRE PAR UN GUIDE DE LUMIÈRE

(30) Priorität: 31.03.2014 DE 102014004698
(43) Veröffentlichungstag der Anmeldung: 28.12.2016
(73) Patentinhaber: Ebel, Matthias, 80796 München (DE)
(72) Erfinder: Ebel, Matthias, 80796 München (DE)
(74) Vertreter: Müller-Boré & Partner Patentanwälte PartG mbB
(86) Internationale Anmeldenummer: PCT/EP2015/000703
(87) Internationale Veröffentlichungsnummer: WO 2015/149943

(56) Entgegenhaltungen:
- WO-A1-03/093092
- WO-A1-2014/029759
- DE-U1- 8 520 553
- DE-U1- 9 003 897
- DE-U1-202004 001 297
- DE-U1-202007 006 765
- GB-A- 2 037 969
- GB-A- 2 336 201
- TW-A- 201 404 646
- TW-U- M 384 472
- TW-U- M 431 116
- US-A- 4 422 719
- US-A- 4 901 209
- US-A- 5 446 628
- US-A1- 2006 109 680
- US-A1- 2013 083 185
- US-B1- 6 336 736

## Beschreibung

Die vorliegende Erfindung betrifft eine Beleuchtungseinrichtung von zumindest teilweise muskelbetriebenen Fahrzeugen, insbesondere Fahrrädern, sowie deren Anhängern mithilfe von Lichtführelementen sowie einer zentralen Lichtquelle, ein Verfahren zur Steuerung der Beleuchtungseinrichtung von zumindest teilweise muskelbetriebenen Fahrzeugen und dessen Anhängern sowie eine Applikation bzw. App zur Steuerung der Beleuchtungseinrichtung von zumindest teilweise muskelbetriebenen Fahrzeugen und dessen Anhängern.

Fahrradfahrer sowie Elektrofahrradfahrer setzen sich im Straßenverkehr besonderen Risiken aus, da sie als "schwächere" Verkehrsteilnehmer leicht von Kraftfahrern übersehen werden können. Um solche Risiken zu minimieren, steht einem Fahrradfahrer die Möglichkeit zur Verfügung, sein Fahrrad mit einer Beleuchtungseinrichtung zu versehen. Dabei handelt es sich in der Regel um ein Vorder- und ein Rücklicht, welche jeweils an den Enden des Fahrrads angebracht werden. Diese Beleuchtungseinrichtung wird über einen fest installierten Dynamo mit Strom versorgt. Darüber hinaus besteht die Möglichkeit, die Beleuchtungseinrichtung mittels batterie- oder akkubetriebenen, abnehmbaren Systemen an dem Fahrrad anzubringen.

Fest installierte Vorder- und Rücklichter in Kombination mit einem fest installierten Dynamo haben den Nachteil, dass sie den Witterungseinflüssen ständig ausgesetzt sind. Aus diesem Grund verschleißen sie besonders schnell, was eine unstete Funktionalität der Beleuchtungseinrichtung mit sich zieht. Zudem hat die Verwendung eines fest installierten Dynamos den Nachteil, dass seine Verwendung für den Fahrradfahrer mit einem erhöhten Kraft- bzw. Leistungsaufwand einhergeht. Ein weiterer Nachteil liegt darin, dass für ihre Funktionsweise zwei separate Lichtquellen bzw. Leuchtkörper benötigt werden.

Abnehmbare, batterie- oder akkubetriebene Beleuchtungseinrichtungen andererseits haben den Nachteil, dass ihre Mitnahme vom Fahrrad während Tageszeiten, bei denen eine ausreichende Umgebungshelligkeit herrscht, schlichtweg vergessen wird. Dies macht diese Beleuchtungseinrichtung sehr anfällig für Diebstähle. Daraus folgt, dass bei Bedarf, d.h. zu den Tages- und Nachtzeiten, bei denen keine ausreichende Umgebungshelligkeit vorhanden ist, keine Beleuchtung für das entsprechende Fahrrad vorhanden ist. Ein weiterer Nachteil batterie- oder akkubetriebener Beleuchtungseinrichtungen liegt darin, dass ihre Funktion vom Vorhandensein von Batterien bzw. von aufgeladenen Akkus abhängt. Falls ein Fahrradfahrer vergisst, die entsprechenden Vorkehrungen zu treffen damit solch eine Beleuchtungseinrichtung funktionsfähig ist bzw. bleibt, führt dies bei den Tages- und Nachtzeiten, bei denen keine ausreichende Umgebungshelligkeit vorhanden ist, ebenfalls dazu, dass kein Beleuchtungssystem für das entsprechende Fahrzeug vorhanden ist. Nachteilig ist auch, dass für die Funktionsweise zwei separate Lichtquellen bzw. Leuchtkörper benötigt werden.

Ein weiterer Nachteil beider gängiger Beleuchtungssysteme liegt darin, dass eine Erweiterung ihrer Funktionen nicht vorgesehen und somit nicht bzw. nur mit unverhältnismäßigen Mehrkosten erweitert werden kann. Ferner können gängige Beleuchtungssysteme nicht über ein einfaches, manuelles ein- bzw. Ausschalten der Beleuchtungseinrichtung gesteuert werden.

Bei einem *mobilen Endgerät* handelt es sich um ein Gerät, welches in der Lage ist, in einem mobilen Netzwerk über lokale Netzwerke bzw. Local Area Networks (LANs), wie z.B. Wireless Fidelity (WiFi), oder über Weitverkehrsnetze bzw. Wide Area Networks (WANs) wie z.B. Global System for Mobile Communication (GSM), General Package Radio Service (GPRS), Enhanced Data Rates for Global Evolution (EDGE), Universal Mobile Telecommunications System (UMTS), High Speed Downlink/Uplink Packet Access (HSDPA, HSUPA), Long-Term Evolution (LTE), oder World Wide Interoperability for Microwave Access (WIMAX) drahtlos zu kommunizieren. Eine Kommunikation über weitere, gängige oder Künftige Kommunikationstechnologien ist möglich. Der Begriff *mobiles Endgerät* beinhaltet insbesondere Smartphones, aber auch andere mobile Telefone bzw. Handys, Personal Digital Assistants (PDAs), Tablet PCs sowie alle weiteren gängigen sowie künftige elektronische Geräte, welche mit einer für die Bereitstellung einer externen Lichtquelle für die oben genannte Beleuchtungseinrichtung bzw. für die Steuerung der oben genannten Beleuchtungseinrichtung entsprechenden Technologien ausgestattet ist.

Insbesondere verfügen nahezu alle der heutzutage erhältlichen mobilen Endgeräte bzw. Smartphones über eine Kamerafunktion, um damit Bilder sowie Filme aufzunehmen. Damit eine möglichst gute Qualität der durch Smartphones aufgenommenen Bilder gewährleistet werden kann, sind die meisten Smartphones zusätzlich mit einer Lichtquelle ausgerüstet, welche sowohl als Blitzlicht zur Bildaufnahme, als auch als Dauerlicht verwendet werden kann. So werden für die Gängigen Betriebssysteme für Smartphones beispielsweise Anwendungen bzw. Apps angeboten, welche die Lichtquelle ansteuern, die dem Benutzer als Beleuchtung bzw. Taschenlampe dienen kann. Ferner verfügen heute gängige mobile Endgeräte über einen Beschleunigungssensor, welcher beispielsweise bestimmen kann, ob eine Geschwindigkeitszunahme bzw. -abnahme stattfindet, indem eine für die Beschleunigung repräsentative Größe erfasst wird. Zudem verfügen heute gängige mobile Endgeräte über einen Global Positioning System (GPS) - Sensor, welcher in der Lage ist, für eine Position repräsentative Positionsdaten zu erfassen. Diese Positionsdaten können dann beispielsweise auf einer im mobilen Endgerät integrierten Karte angezeigt werden. Auch beinhalten heute gängige, mobile Endgeräte einen integrierten Lichtsensor bzw. Photozelle, welcher in der Lage ist, eine für die Umgebungshelligkeit repräsentative Größe zu erfassen. Diese Größe kann beispielsweise dazu verwendet werden, eine Helligkeit eines Displays des mobilen Endgerätes der erfassten Umgebungshelligkeit anzupassen.

Eine Fahradbeleuchtungseinrichtung zur Aufnahme eines Smartphones ist aus TW M384472U1 bekannt. Weitere Beleuchtungseinrichtungen sind aus US 6,336,73 B1, US 2006/0109680 A1, TW 201404646 A, TW M431116 U1, US 4,901,209 B, WO03/093092 A, US 4,422,719 B, US 5,446,628 B, DE 20 2004 001 297 U1, DE 9003897 U, DE 20 2007 006 765 U1 sowie GB 2 037 969 A bekannt. Dokument US 4,901,209 offenbart eine Beleuchtungseinrichtung gemäß dem Oberbegriff von Anspruch 1.

Aufgabe der vorliegenden Erfindung ist es, auf eine einfache, kostengünstige sowie flexible Weise die Beleuchtungseinrichtung von Fahrrädern zu ersetzen und/oder zu ergänzen sowie die Beleuchtungseinrichtung zu steuern, um die Sicherheit der Fahrradfahrer bei ihrer Teilnahme am Straßenverkehr zu erhöhen.

Diese Aufgabe wird erfindungsgemäß durch eine Beleuchtungseinrichtung für ein zumindest teilweise muskelbetriebenes Fahrzeug bzw. dessen Anhänger gemäß Anspruch 1, ein Verfahren zur Steuerung einer Beleuchtungseinrichtung gemäß Anspruch 7, sowie einer Applikation zur Steuerung einer Beleuchtungseinrichtung gemäß Anspruch 10 gelöst. Bevorzugte Ausführungsformen sind Gegenstand der abhängigen Ansprüche.

Gemäß einem ersten Aspekt der Erfindung wird eine Beleuchtungseinrichtung für ein zumindest teilweise muskelbetriebenes Fahrzeug bzw. dessen Anhänger bereitgestellt, welche folgendes umfasst:
zwei oder mehr Lichtführelemente; und
eine Montageeinrichtung, welche geeignet ist, eine externe Lichtquelle dergestalt aufzunehmen, dass das von der Lichtquelle abgestrahlte Licht wenigstens teilweise in das Lichtführelement eingespeist und derart aus dem Lichtführelement austreten kann, dass das austretende Licht als Beleuchtung für das zumindest teilweise muskelbetriebene Fahrzeug bzw. dessen Anhänger dienen kann, wobei ein erstes Lichtführelement als ein gebogenes, starres Lichtführelement ausgebildet ist, und ein zweites, biegsames Lichtführelement über eine Aussparung von dem gebogenen, starren Lichtführelement derart aufgenommen ist, dass das in das gebogene Lichtführelement zumindest teilweise eingespeiste bzw. eingekoppelte Licht zumindest teilweise in das zweite Lichtführelement aufgenommen werden kann.

Die Beleuchtungseinrichtung dient als Beleuchtungseinrichtung für ein zumindest teilweise muskelbetriebenes Fahrzeug bzw. dessen Anhänger. Das zumindest teilweise muskelbetriebene Fahrzeug umfasst insbesondere Fahrräder jeglicher Art, Elektrofahrräder bzw. Elektroräder bzw. E-Bikes sowie deren Anhänger. Entsprechend kann der Begriff "Fahrrad" im weiteren Verlauf dieser Beschreibung auch die Begriffe Elektrofahrrad, Fahrrad mit Anhänger sowie Elektrofahrrad mit Anhänger beinhalten.

Die Beleuchtungseinrichtung umfasst erfindungsgemäß wenigstens zwei Lichtführelemente. Der Begriff Lichtführelement umfasst Lichtwellenleiter bzw. Glasfaserkabel bzw. Lichtleiterkabel.

Eine Vielzahl von Lichtführelementen umfasst insbesondere 9 Lichtführelemente. Eine beliebige andere Anzahl an Lichtführelementen ist jedoch ebenfalls möglich.

Weist die Beleuchtungseinrichtung zwei oder mehr Lichtführelemente auf, so werden diese derart aneinander angeordnet, dass die Montageeinrichtung geeignet ist, das von der externen Lichtquelle abgestrahlte Licht wenigstens teilweise in alle Lichtführelemente einzuspeisen bzw. einzukoppeln, so dass das von allen Lichtführelementen abgestrahlte Licht derart aus dem Lichtführelement austreten kann, dass das austretende Licht als Beleuchtung für das Fahrrad dienen kann.

Die Beleuchtungseinrichtung umfasst zudem eine Montageeinrichtung, welche geeignet ist, eine externe Lichtquelle aufzunehmen. Vorzugsweise wird die Lichtquelle durch die Montageeinrichtung aufgenommen, indem die Lichtquelle von der Montageeinrichtung umschlossen wird. Somit kann sichergestellt werden, dass auch bei einer schnellen Bewegung des Fahrrades die Lichtquelle in der Montageeinrichtung ihre Position dergestalt beibehält, dass das durch die Lichtquelle abgestrahlte Licht wenigstens teilweise in das Lichtführelement eingespeist und somit dergestalt aus dem Lichtführelement austreten kann, dass das austretende Licht als Beleuchtung für das Fahrrad dienen kann.

Ein Vorteil der Beleuchtungseinrichtung liegt darin, dass ihre Komponenten sehr preiswert in der Beschaffung sind und somit keinerlei Anreiz darstellen, diese zu entwenden. Somit kann die Beleuchtungseinrichtung getrost am Fahrrad belassen werden.

Ein weiterer Vorteil der Beleuchtungseinrichtung liegt darin, dass die Lichtführelemente durch das in sie eingestrahlte bzw. eingekoppelte Licht selbst einen Teil des Lichts abstrahlen bzw. Leuchten bzw. Illuminieren. Dadurch wird das Fahrrad von allen Seiten sichtbar, was die Sicherheit des Fahrradfahrers im Straßenverkehr erhöht. Dies gilt insbesondere für Kreuzungen, an denen sich Fahrzeuge dem Fahrradfahrer von der Seite nähern.

Vorzugsweise nimmt die Montageeinrichtung ein mobiles Endgerät bzw. Smartphone auf, so dass eine in dem mobilen Endgerät bzw. Smartphone integrierte Lichtquelle als die externe Lichtquelle dient.

Eine in dem mobilen Endgerät integrierte Lichtquelle umfasst sämtliche gängige sowie künftige Lichtquellen, die in Smartphones integriert sind. Insbesondere umfasst sie Leuchtdioden wie beispielsweise Light-Emitting Diodes, LEDs, wie z.B. White LEDs, Pulse-LEDs und Cree-LEDs.

Das Verwenden eines mobilen Endgeräts bzw. Smartphones als die externe Lichtquelle hat den Vorteil, dass jeder Fahrradfahrer dieses stets bei sich trägt. Mobile Endgeräte bzw. Smartphones sind zu einem allgegenwärtigen bzw. ubiqitären Gegenstand geworden, die jeder Benutzer, ähnlich wie seinen Hausschlüssel und sein Portemonnaie, stets mit sich trägt. Dadurch hat jeder Fahrradfahrer die externe Lichtquelle für seine Beleuchtungseinrichtung stets bei sich. Ferner minimiert sich die Wahrscheinlichkeit, dass ein Nutzer das Smartphone als Lichtquelle bei guter Witterung in der Beleuchtungseinrichtung vergisst. Zudem führen die Allgegenwärtigkeit sowie die Bedeutung von Smartphones dazu, dass jeder Benutzer stets darauf achtet, den Akku bzw. Akkumulator des Smartphones stets mit ausreichend elektrischer Energie zu laden. Somit verbleibt ein Fahrradfahrer, welcher die oben genannte Beleuchtungseinrichtung verwendet, nicht ohne Fahrradbeleuchtung, da er die externe Lichtquelle mit ausreichend elektrischer Energie versehen stets bei sich trägt. Ferner ist die Verwendung eines Smartphones als externe Lichtquelle die oben genannte Beleuchtungseinrichtung umweltfreundlich, da kein separater Akku für die Beleuchtungseinrichtung verwendet werden muss, sondern der bereits im mobilen Endgerät integrierte Akku verwendet werden kann.

Vorzugsweise weist die Montageeinrichtung eine Öffnung auf, welche einer in das mobilen Endgerät bzw. Smartphone integrierten Lichtquelle entspricht.

Dadurch, dass die Öffnung in einer Montageeinrichtung einer in das Smartphone integrierten Lichtquelle entspricht, kann das von der in dem Smartphone integrierten Lichtquelle ausstrahlende Licht zumindest teilweise in die Öffnung der Montageeinrichtung einfallen und in das zumindest eine Lichtführelement eingespeist werden..

Vorzugsweise ist bei der Öffnung der Montageeinrichtung eine Linse bzw. ein optisches Element angebracht. Dadurch kann die Linse das durch die externe Lichtquelle einfallende Licht geeignet optisch beeinflussen, z.B. bündeln, so dass das beeinflusste Licht wenigstens teilweise in das wenigstens eine Lichtführelement einfallen kann.

Vorzugsweise umfasst die Beleuchtungseinrichtung eine Hülse, welche unterhalb der Öffnung der Montageeinrichtung zu befestigen ist und dazu geeignet ist, das wenigstens eine Lichtführelement zumindest teilweise aufzunehmen. Die Hülse nimmt das wenigstens eine Lichtführelement derart auf, dass das durch die externe Lichtquelle einfallende Licht zumindest teilweise in das wenigstens eine Lichtführelement eingespeist und derart aus dem wenigstens einen Lichtführelement austreten kann, dass das austretende Licht als Beleuchtung für das Fahrrad dienen kann.

Vorzugsweise ist die Montageeinrichtung wasserfest, so dass die externe Lichtquelle, beispielsweise eine in ein mobiles Endgerät eingebaute Lichtquelle, vor witterungsbedingten Einflüssen geschützt ist.

Vorzugsweise können die zwei oder mehr Lichtführelemente der Beleuchtungseinrichtung in einem Schwanenhals bzw. Flexarm verlegt werden, so dass die Austrittsrichtung des aus dem jeweiligen Lichtführelement austretenden Lichts durch Bewegung des Schwanenhalses bzw. Flexarmes eingestellt werden kann.

Bei dem Schwanenhals bzw. Flexarm handelt es sich um ein halbsteifes, biegsames Verbindungselement, welches insbesondere aus einem helix-förmigem Metallschlauch hergestellt werden kann. Durch seine helix-förmige Herstellung ist es dazu geeignet, dass es nahezu in jede Richtung gebogen bzw. in nahezu jeder beliebigen Stellung verharren kann. Dadurch kann die Austrittsrichtung des aus dem Lichtführelement austretenden Lichts durch Bewegung des Schwanenhalses eingestellt werden. Da der Schwanenhals eine hohle Form aufweist, ist er dazu geeignet, ein- oder mehrere Lichtführelemente aufzunehmen.

Vorzugsweise kann der Schwanenhals an der Hülse, welche unterhalb der Öffnung der Montageeinrichtung der Beleuchtungseinrichtung anzubringen ist, angebracht werden. Dadurch kann das zumindest eine Lichtführelement von der Hülse derart aufgenommen werden, dass das durch die externe Lichtquelle einfallende Licht in das Lichtführelement zumindest teilweise eingespeist wird. Gleichzeitig kann die Austrittsrichtung des aus dem Lichtführelement austretenden Lichts durch Bewegung des Schwanenhalses eingestellt werden.

Vorzugsweise umfasst die Beleuchtungseinrichtung zudem:
wenigstens ein Strahlformungselement, welches an dem Lichtführelement angebracht werden kann, so dass das Strahlformungselement die Form und/oder Richtung des aus dem Lichtführelement austretenden Lichts einstellen, bevorzugt bündeln kann.

Der Begriff Strahlformungselement kann dabei jede Art von Reflektoren und Linsen beinhalten. Es kann sich dabei beispielsweise um einen LED-Reflektor handeln, welcher mittels eingebauter Linsen das aus dem Lichtführelement austretende Licht bündelt, so dass dieses Licht als Vorderlicht bzw. Vorderbeleuchtung für das Fahrrad dienen kann. Zudem kann der Begriff Strahlformungselement farbige Reflektoren und Linsen beinhalten, so dass das aus dem Lichtführelement austretende Licht gebündelt sowie in jeder beliebigen Farbe abgestrahlt werden kann. Beispielsweise kann an einem Lichtführelement ein roter Reflektor dergestalt aufgenommen werden, dass er das aus zumindest einem Lichtführelement austretende Licht bündelt und dieses rot abgestrahlt wird, so dass es als rote Rück- bzw. Warn- bzw. Bremsleuchte für das Fahrrad verwendet werden kann.

Weiterhin kann der Begriff Strahlformungselement Reflektoren beinhalten, welche das aus dem zumindest einem Lichtführelement austretende Licht brechen. Mithilfe solcher Reflektoren kann das austretende Licht indirekt abgestrahlt werden. Das indirekt abgestrahlte Licht hat den Vorteil, dass es im Straßenverkehr eine zusätzliche Beleuchtungs- bzw. Leucht- bzw. Warnfunktion darstellen kann.

Ferner kann der Begriff Strahlformungselement jegliche Art von ausleuchtbaren Figuren beinhalten, die aufgrund einer zumindest teilweise lichtdurchlässigen Form dazu geeignet sind, das von dem zumindest einem Lichtführelement austretende Licht aufzunehmen und entsprechend ihrer Farbe und Form abzustrahlen. Dieses abgestrahlte Licht hat den Vorteil, dass es als zusätzliche Leucht- und Warnfunktion dient. Ferner hat es den Vorteil, dass ein Benutzer der Beleuchtungseinrichtung diese individuell gestalten kann.

Der Begriff Strahlformungselement ist allerdings nicht auf die genannten Ausführungen beschränkt. Vielmehr beinhaltet der Begriff jedes Element, welches in der Lage ist, die Form und/oder Richtung des von dem zumindest einen Lichtführelement austretenden Lichts auf irgendeine Art einzustellen bzw. zu bündeln entsprechend eingestellt bzw. gebündelt abzustrahlen.

Die Anzahl der Lichtführelemente kann sich an eine Anzahl von Strahlformungselementen richten. Beispielsweise kann ein Fahrradfahrer festlegen, dass er ein Vorderlicht, ein Rücklicht sowie eine beliebige, beleuchtbare Figur als Beleuchtungseinrichtung an seinem Fahrrad anbringen will, wobei eine beliebige, beleuchtbare Figur beispielsweise einen beleuchtbaren Reflektor sowie eine beleuchtbare Comicfigur umfasst. Somit kann die Anzahl der Lichtführelemente sich auf 3 beschränken. Es ist jedoch ebenfalls möglich, dass die Anzahl der Lichtführelemente deutlich höher ist als die Anzahl der verwendeten Strahlformungselemente. In solch einem Fall kann eines oder mehr der Strahlformungselemente an einem Bündel von Lichtführelementen angebracht sein, so dass es das austretende Licht des Bündels der Lichtführelemente aufnimmt.

Vorzugsweise ist die Montageeinrichtung der Beleuchtungseinrichtung wasserdicht. Dies hat den Vorteil, dass die externe Lichtquelle im geschlossenen Zustand der Montageeinrichtung vor Witterungsbedingungen geschützt ist.

Vorzugsweise ist die Montageeinrichtung an einer Lenkvorrichtung des teilweise muskelbetriebenen Fahrzeuges zu befestigen. Dies hat den Vorteil, dass der Fahrradfahrer die externe Lichtquelle bequem an der Montageeinrichtung anbringen kann sowie die Beleuchtungseinrichtung falls notwendig bequem und auch während der Fahrt über die externe Lichtquelle ein- und ausschalten bzw. gemäß dem weiter unten genannten Verfahren bzw. Ausführungsformen hiervon zur Steuerung der Beleuchtungseinrichtung steuern kann.

Gemäß einem zweiten Aspekt der vorliegenden Erfindung wird die zugrunde liegende Aufgabe durch ein Verfahren zur Steuerung einer Beleuchtungseinrichtung für ein zumindest teilweise muskelbetriebenes Fahrzeug bzw. dessen Anhänger, umfassend:
wenigstens ein Lichtführelement; und eine Montageeinrichtung, welche geeignet ist, eine externe Lichtquelle dergestalt aufzunehmen, dass das von der Lichtquelle abgestrahlte Licht wenigstens teilweise in das Lichtführelement eingespeist und derart aus dem Lichtführelement austreten kann, dass das austretende Licht als Beleuchtung für das zumindest teilweise muskelbetriebene Fahrzeug bzw. dessen Anhänger dienen kann, wobei die Montageeinrichtung ein mobiles Endgerät bzw. Smartphone aufnimmt und eine in dem mobilen Endgerät bzw. Smartphone integrierte Lichtquelle als die externe Lichtquelle dient gelöst, wobei das Verfahren folgende Funktionen aufweist:
Erfassen von Beschleunigungsdaten mittels eines in ein mobiles Endgerät bzw. Smartphone integrierten Beschleunigungssensors, wobei das mobile Endgerät bzw. Smartphone von einer Montageeinrichtung der Beleuchtungseinrichtung aufgenommen ist;
Steuern bzw. Regeln der Beleuchtungseinrichtung in Abhängigkeit der Beschleunigungsdaten.

Vorzugsweise beinhaltet das Steuern bzw. Regeln der Beleuchtungseinrichtung zudem folgende Funktionen:
falls eine für die Beschleunigung repräsentative Größe einen speziellen Schwellenwert überschreitet:
Aktivieren einer in dem mobilen Endgerät bzw. Smartphone integrierten Lichtquelle; und/oder
Aktivieren einer Blink- oder Stroboskopfrequenz der Lichtquelle.

Der Begriff spezieller Schwellenwert beinhaltet einen vorbestimmten bzw. vorbestimmbaren Schwellenwert.

Eine für die Beschleunigung repräsentative Größe beinhaltet die Internationale Einheit bzw. SI-Einheit für die Beschleunigung: a̅= m/s². Allerdings kann sie jede andere, für die Beschleunigung repräsentative Größe, beispielsweise nach dem CGS (Centimetre Gram Second), nach dem Planck-Einheitssystem oder nach dem Angloamerikanischen Maßsystem beinhalten.

Vorzugsweise weist das Verfahren zur Steuerung einer Beleuchtungseinrichtung zudem folgende Funktionen auf:
Erfassen von für die Position repräsentative GPS, Global Positioning System, Positionsdaten mittels eines in dem Endgerät bzw. Smartphone integrierten GPS-Sensors;
falls die erfassten Positionsdaten einer speziellen, gefährlichen GPS-Position definierten GPS-Position entspricht:
Aktivieren eines Blink- bzw. Stroboskopeffekts der Lichtquelle.

Eine spezielle, gefährliche GPS-Position umfasst dabei eine als gefährlich vorbestimmte bzw. vorbestimmbare GPS-Position.

Vorzugsweise weist das Verfahren zur Steuerung einer Beleuchtungseinrichtung zudem folgende Funktionen auf
Erfassen von Helligkeitsdaten mittels eines in das mobile Endgerät bzw. Smartphone integrierten Lichtsensors bzw. Photozelle;
falls eine für die Helligkeit repräsentative Größe einen speziellen Schwellenwert unterschreitet:
Aktivieren der Lichtquelle;
wobei vorzugsweise eine Ausstrahlungsstärke der aktivierten Lichtquelle in Abhängigkeit von neu erfassten Helligkeitsdaten automatisch geregelt wird.

Ein spezieller Schwellenwert umfasst dabei einen vorbestimmten bzw. vorbestimmbaren Schwellenwert.

Gemäß einem dritten Aspekt der vorliegenden Erfindung wird die zugrunde liegende Aufgabe durch eine Applikation zur Steuerung einer Beleuchtungseinrichtung für ein zumindest teilweise muskelbetriebenes Fahrzeug bzw. dessen Anhänger, umfassend:
wenigstens ein Lichtführelement; und eine Montageeinrichtung, welche geeignet ist, eine externe Lichtquelle dergestalt aufzunehmen, dass das von der Lichtquelle abgestrahlte Licht wenigstens teilweise in das Lichtführelement eingespeist und derart aus dem Lichtführelement austreten kann, dass das austretende Licht als Beleuchtung für das zumindest teilweise muskelbetriebene Fahrzeug bzw. dessen Anhänger dienen kann, wobei die Montageeinrichtung ein mobiles Endgerät bzw. Smartphone aufnimmt und eine in dem mobilen Endgerät bzw. Smartphone integrierte Lichtquelle als die externe Lichtquelle dient gelöst, wobei die Applikation dazu ausgebildet ist, ein mobiles Endgerät bzw. Smartphone zu veranlassen, ein Verfahren zur Steuerung einer Beleuchtungseinrichtung gemäß dem zweiten Aspekt bzw. einer bevorzugten Ausführungsform zu implementieren..

Das beschriebene Verfahren hat den Vorteil, dass das Smartphone, welches die externe Lichtquelle bereitstellt, zudem dazu verwendet werden kann, die Beleuchtungseinrichtung in einer Art und Weise zu steuern, welche weit über ein manuelles Ein- und Ausschalten der Lichtquelle hinausgeht. Insbesondere kann die Beleuchtungseinrichtung zusätzlich zu einer herkömmlichen Beleuchtungseinrichtung derart gesteuert werden, dass in Abhängigkeit einer erfassten Beschleunigung bzw. einer erfassten Bremsbeschleunigung die Beleuchtungseinrichtung derart gesteuert werden, dass durch das Aktivieren der im Smartphone integrierten Lichtquelle bzw. durch das Aktivieren eine Stroboskopeffekts der in das Smartphone integrierten Lichtquelle eine zusätzliche Warnfunktion aktiviert wird. Dadurch wird die Sicherheit des Fahrradfahrers, der die Beleuchtungseinrichtung im Straßenverkehr verwendet, erhöht.

Diese und andere Aufgaben, Merkmale und Vorteile der vorliegenden Erfindung werden aus dem Studium der folgenden detaillierten Beschreibung bevorzugter Ausführungsformen und der beiliegenden Zeichnungen verdeutlicht. Nicht alle der beschriebenen Ausführungsformen weisen die Merkmale der Beleuchtungseinrichtung nach Anspruch 1 auf. Es ist ersichtlich, dass, obwohl Ausführungsformen separat beschrieben werden, einzelne Merkmale daraus zu zusätzlichen Ausführungsformen kombiniert werden können.
- **Fig. 1**: zeigt eine Montageeinrichtung einer Beleuchtungseinrichtung;
- **Fig. 2**: zeigt eine Beleuchtungseinrichtung, welche eine Montageeinrichtung, zwei Lichtführelemente sowie zwei Strahlformungselementen beinhaltet;
- **Fig. 3A**: zeigt ein mobiles Endgerät bzw. Smartphone, welches von der Montageeinrichtung der Beleuchtungseinrichtung aufgenommen werden soll;
- **Fig. 3B**: zeigt eine Taschenlampe, welche von der Montageeinrichtung der Beleuchtungseinrichtung aufgenommen werden soll;
- **Fig. 4A**: zeigt ein mobiles Endgerät bzw. Smartphone, welches von der Montageeinrichtung aus Figur 3A aufgenommen ist;
- **Fig. 4B**: zeigt eine Taschenlampe, welche von der Montageeinrichtung aus Figur 3B aufgenommen ist;
- **Fig. 5**: zeigt zwei Lichtführelemente, zwei Strahlformungselemente sowie eine Hülse;
- **Fig. 6A**: zeigt zwei Lichtführelemente, die von einer Hülse aufgenommen sind;
- **Fig. 6B**: zeigt zwei Lichtführelemente, die von einem Magneten aufgenommen sind;
- **Fig. 7**: zeigt neun Lichtführelemente, die von einer Hülse aufgenommen sind;
- **Fig. 8**: zeigt neun Lichtführelemente, die von einer Hülse aufgenommen sind und zu drei Bündeln von Lichtführelementen zusammengefasst werden;
- **Fig. 9A**: zeigt ein erstes Lichtführelement, in welchem ein zweites Lichtführelement angebracht ist;
- **Fig. 9B**: zeigt ein erstes Lichtführelement, in welches ein zweites Lichtführelement über eine Öffnung aufgenommen werden kann;
- **Fig. 10**: zeigt ein Ende des ersten und des zweiten Lichtführelements der Figuren 9A und 9B;
- **Fig. 11**: zeigt eine Vielzahl von Lichtführelementen, die von einer Hülse aufgenommen sind, zusammen mit der Montageeinrichtung;
- **Fig. 12**: zeigt die Beleuchtungseinrichtung aus Figur 2, angebracht an einem Fahrrad;
- **Fig. 13A**: zeigt eine Beleuchtungseinrichtung angebracht an einem Fahrrad mit Fahrradanhänger;
- **Fig. 13B**: zeigt eine Kupplung zweier Lichtwellenleiter über ein Magnet;
- **Fig. 14**: zeigt die Beleuchtungseinrichtung der Figur 13A angebracht an dem Fahrradanhänger.

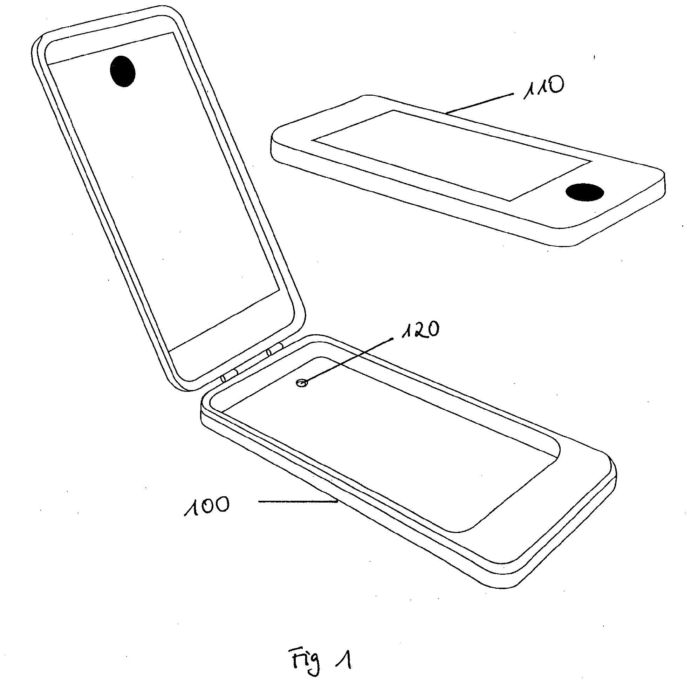

**Figur 1** zeigt eine Montageeinrichtung 100, welche dazu geeignet ist, eine externe Lichtquelle 110 aufzunehmen. In Figur 1 ist als externe Lichtquelle 110 eine in ein Smartphone integrierte Lichtquelle als externe Lichtquelle 110 aufzunehmen. Allerdings kann die Montageeinrichtung 100 auch eine beliebige andere externe Lichtquelle aufnehmen.

Die Montageeinrichtung 100 weist vorzugsweise eine Öffnung 120 auf, welche der in das Smartphone integrierten Lichtquelle entspricht. Dadurch kann das von der in das Smartphone integrierten Lichtquelle ausstrahlende Licht zumindest teilweise in die Öffnung der Montageeinrichtung 100 einstrahlen bzw. eingekoppelt werden.

Vorzugsweise ist bei der Öffnung 120 der Montageeinrichtung 100 eine Linse bzw. ein optisches Element angebracht (nicht in Figur 1 gezeigt). Dadurch kann die Linse bzw. das optische Element das durch die externe Lichtquelle 110 einfallende Licht geeignet optisch beeinflussen, z.B. bündeln, so dass das beeinflusste Licht zumindest teilweise in die Öffnung der Montageeinrichtung 120 einstrahlen kann.

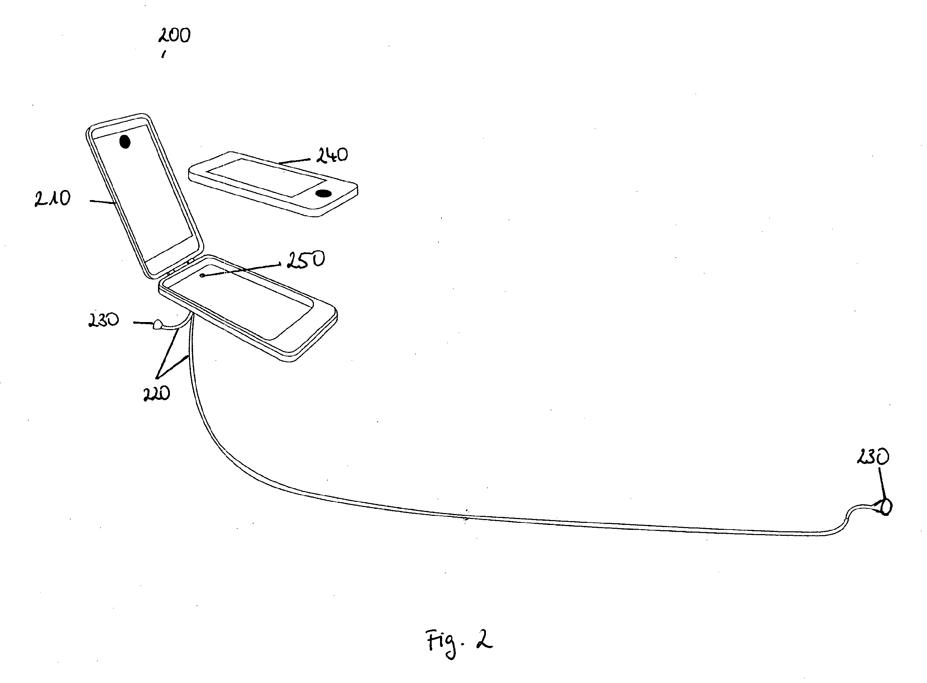

**Figur 2** zeigt eine Beleuchtungseinrichtung 200, welche die Montageeinrichtung 210 aus Figur 1 beinhaltet. Die Beleuchtungseinrichtung 200 beinhaltet in diesem Beispiel zwei Lichtführelemente 220, welche derart angebracht sind, dass das von der Lichtquelle 240 ausstrahlende Licht zumindest teilweise in die Lichtführelemente 220 einstrahlt bzw. eingekoppelt wird. Die Beleuchtungseinrichtung 200 beinhaltet ferner zwei Strahlformungselemente 230, die jeweils an einem der Lichtführelemente 220 angebracht sind.

Vorzugsweise umfasst die Beleuchtungseinrichtung 200 eine Hülse (nicht in Figur 2 gezeigt), welche unterhalb der Öffnung 250 der Montageeinrichtung 210 zu befestigen ist (nicht in Figur 1 gezeigt) und dazu geeignet ist, zumindest ein Lichtführelement 220 zumindest teilweise aufzunehmen.

In der beispielhaften Beleuchtungseinrichtung 200 der Figur 2 weist die Beleuchtungseinrichtung 200 zwei Lichtführelemente 220 auf, welche derart von der Hülse aufgenommen werden, dass das durch die externe Lichtquelle 240 einfallende Licht zumindest teilweise derart in die zwei Lichtführelemente 220 eingespeist und derart aus den zwei oder mehr Lichtführelementen 220 über die Strahlformungselemente 230 austreten kann, dass das austretende Licht als Beleuchtung für das Fahrrad dienen kann.

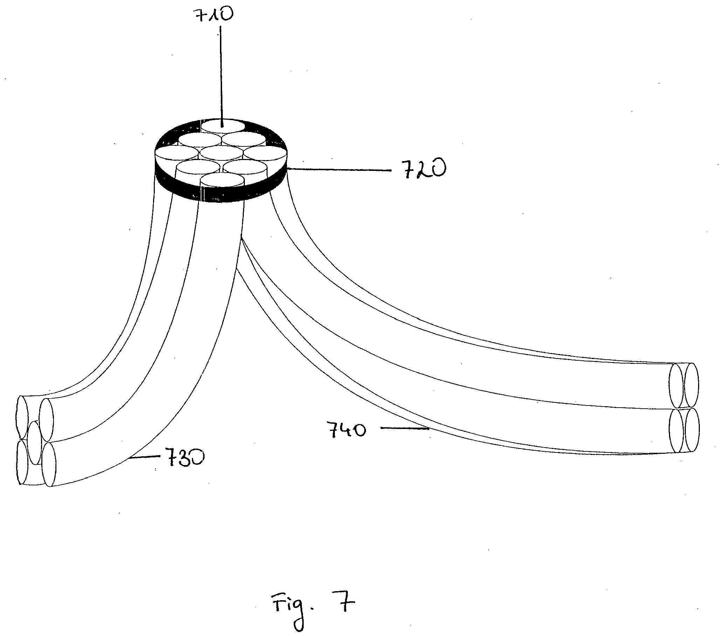

Weist die Beleuchtungseinrichtung 200 mehr als zwei Lichtführelemente 220 auf, so kann das austretende Licht in die mehr als zwei Lichtführelemente 220 eingespeist werden, wie weiter unten mit Bezug auf Figur 7 beschrieben. Diese Anordnung hat den Vorteil, dass mehrere Lichtführelemente gebündelt werden können, so dass die Intensität des austretenden Lichts erhöht wird. Die Bündel von Lichtführelementen an den Ort am Fahrrad bzw. dessen Anhänger verlegt werden kann, an welchem das Licht gerade benötigt bzw. gewünscht wird.

Vorzugsweise ist die Montageeinrichtung 210 wasserfest, so dass die externe Lichtquelle vor witterungsbedingten Einflüssen geschützt ist.

Im Folgenden kann der Begriff "Lichtführelement" durch den Begriff "Bündel einer beliebigen Anzahl von Lichtführelementen" ersetzt werden.

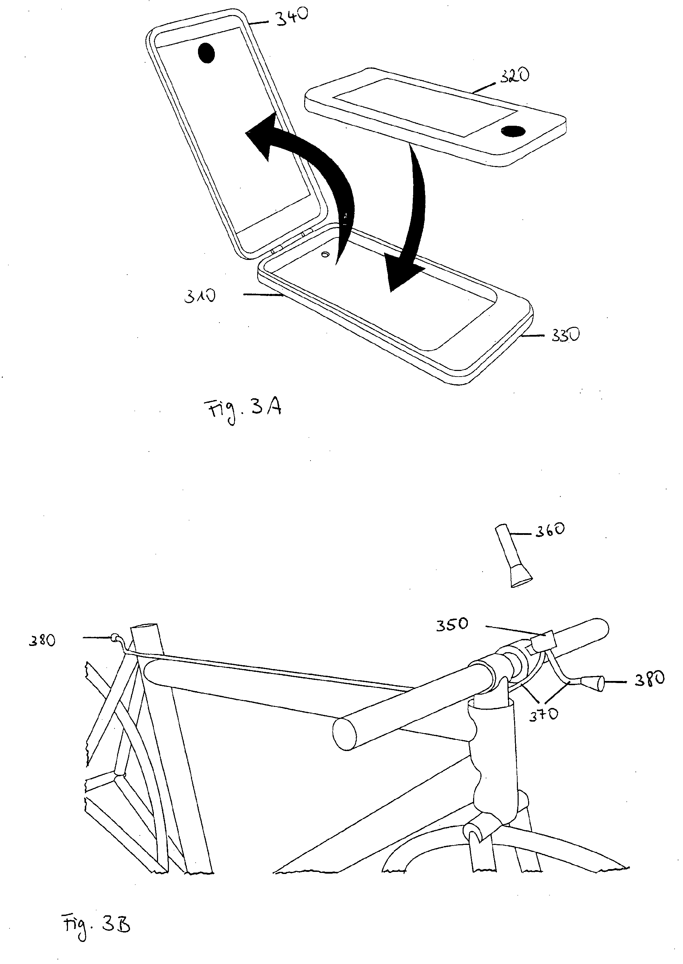

**Figur 3A** zeigt ein Smartphone 320, welches in die Montageeinrichtung 310 der Figur 1 aufzunehmen ist. Die Montageeinrichtung 310 in Figur 3A ist geöffnet. Das Smartphone 320 ist zumindest teilweise in einem unteren Gehäuseteil 330 der Montageeinrichtung 310 aufzunehmen. Nachdem das Smartphone 320 vom unteren Gehäuseteil 330 aufgenommen ist, kann das obere Gehäuseteil 340 geschlossen werden (nicht in Figur 3A gezeigt).

**Figur 3B** zeigt eine Beleuchtungseinrichtung, welche eine alternative Montageeinrichtung 350 beinhaltet. Die alternative Montageeinrichtung eignet sich dazu, eine Taschenlampe 360 bzw. sonstige geeignete Lichtquelle als externe Lichtquelle aufzunehmen. Die Taschenlampe 360 ist zumindest teilweise in ein Gehäuse der Montageeinrichtung 350 aufzunehmen.

Die alternative Beleuchtungseinrichtung in diesem Beispiel umfasst zwei Lichtführelemente 370, welche derart angebracht sind, dass das von der Taschenlampe 360 ausstrahlende Licht zumindest teilweise in die Lichtführelemente 370 einstrahlen kann bzw. eingekoppelt werden kann. Die Beleuchtungseinrichtung beinhaltet ferner zwei Strahlformungselemente 380, die jeweils an einem der Lichtführelemente 370 angebracht sind.

Vorzugsweise umfasst die Beleuchtungseinrichtung eine Hülse (nicht in Figur 3B gezeigt), welche unterhalb einer Öffnung der Montageeinrichtung 350 zu befestigen ist (nicht in Figur 3B gezeigt) und dazu geeignet ist, zumindest ein Lichtführelement 370 zumindest teilweise aufzunehmen.

In der beispielhaften Beleuchtungseinrichtung der Figur 3B weist die Beleuchtungseinrichtung zwei Lichtführelemente 370 auf, welche derart von der Hülse aufgenommen werden können, dass das durch die Taschenlampe 360 einfallende Licht zumindest teilweise derart in die zwei Lichtführelemente 370 eingestrahlt bzw. eingekoppelt werden kann und derart aus den zwei oder mehr Lichtführelementen 370 über die Strahlformungselemente 380 austreten kann, dass das austretende Licht als Beleuchtung für das Fahrrad dienen kann.

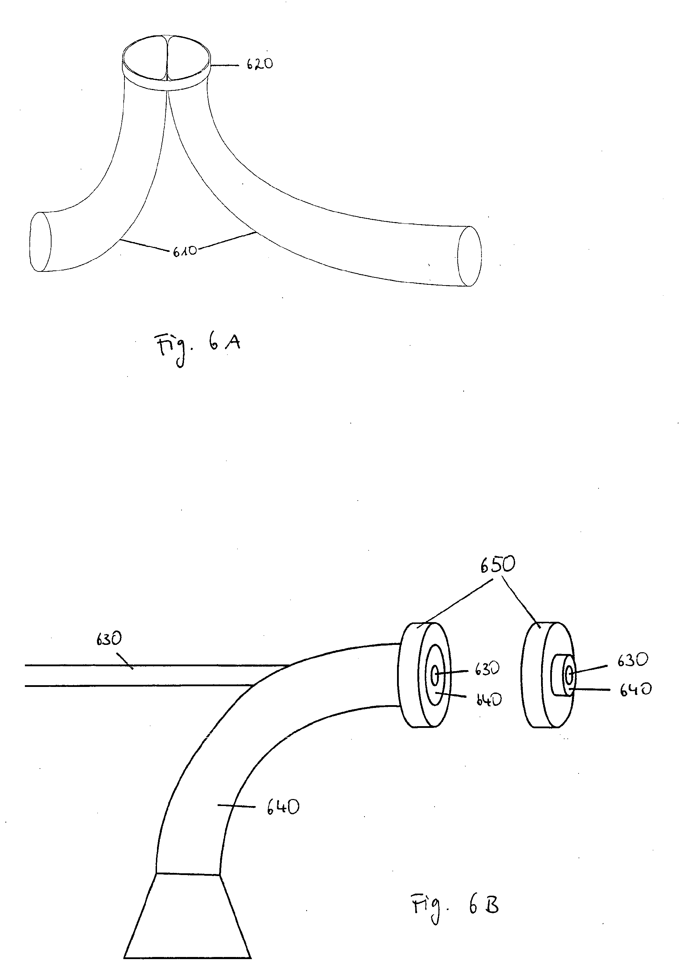

Alternativ dazu können die Lichtführelemente 370 auch mithilfe von Magneten, wie mit Bezug auf Figur 6B beschrieben, an der Montageeinrichtung 350 befestigt werden (nicht in Figur 3B gezeigt).

Die Beleuchtungseinrichtung kann auch mehr als zwei Lichtführelemente 370 aufweisen. In diesem Fall kann das austretende Licht in die mehr als zwei Lichtführelemente eingespeist werden, wie weiter unten mit Bezug auf Figur 7 beschrieben. Diese Anordnung hat den Vorteil, dass mehrere Lichtführelemente gebündelt werden können, so dass die Intensität des austretenden Lichts erhöht wird. Die Bündel von Lichtführelementen können an den Ort am Fahrrad bzw. dessen Anhänger verlegt werden, an welchem das Licht gerade benötigt bzw. gewünscht wird.

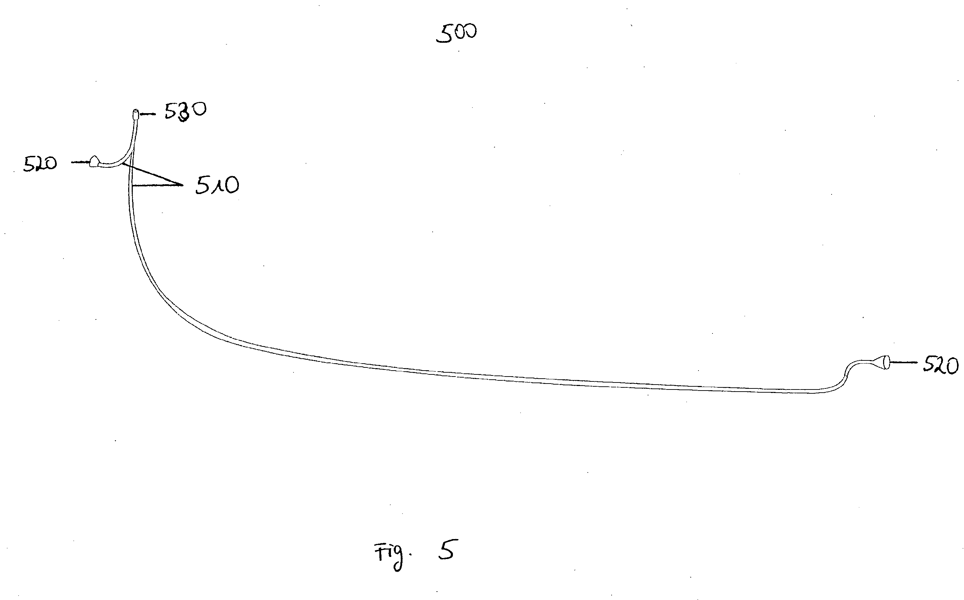

In einem weiteren Beispiel umfasst die Beleuchtungseinrichtung eine Hülse (nicht in Figur 3B gezeigt), welche unterhalb der Öffnung der Montageeinrichtung zu befestigen ist und dazu geeignet ist, eine beliebige Anzahl von Lichtführelementen zumindest teilweise aufzunehmen, wie weiter unten mit Bezug auf Figuren 5, 6A, 7 und 8 beschrieben. Die Lichtführelemente werden derart von der Hülse aufgenommen, dass das durch die Taschenlampe einfallende Licht zumindest teilweise derart in die aufgenommenen Lichtführelemente eingespeist bzw. eingekoppelt und derart aus den aufgenommenen Lichtführelementen austreten kann, dass das austretende Licht als Beleuchtung für das Fahrrad bzw. dessen Anhänger dienen kann.

Die Lichtführelemente 370 können jeweils an ein vorderes Ende sowie an ein hinteres Ende des Fahrrades verlegt werden. So kann mithilfe eines ersten Strahlformungselements 380, z.B. einer Linse oder einem weißen LED-Reflektor, das am vorderen Ende des Fahrrads aus dem Lichtführelement 370 austretende Licht derart gebündelt werden, dass es als Vorderlicht für das Fahrrad verwendet werden kann. Mithilfe eines zweiten Strahlformungselements 380, z.B. einer roten Linse oder einem roten LED-Reflektor, kann das am hinteren Ende von dem Lichtführelement 370 austretende Licht derart gebündelt werden, dass es als Rücklicht für das Fahrrad verwendet werden kann.

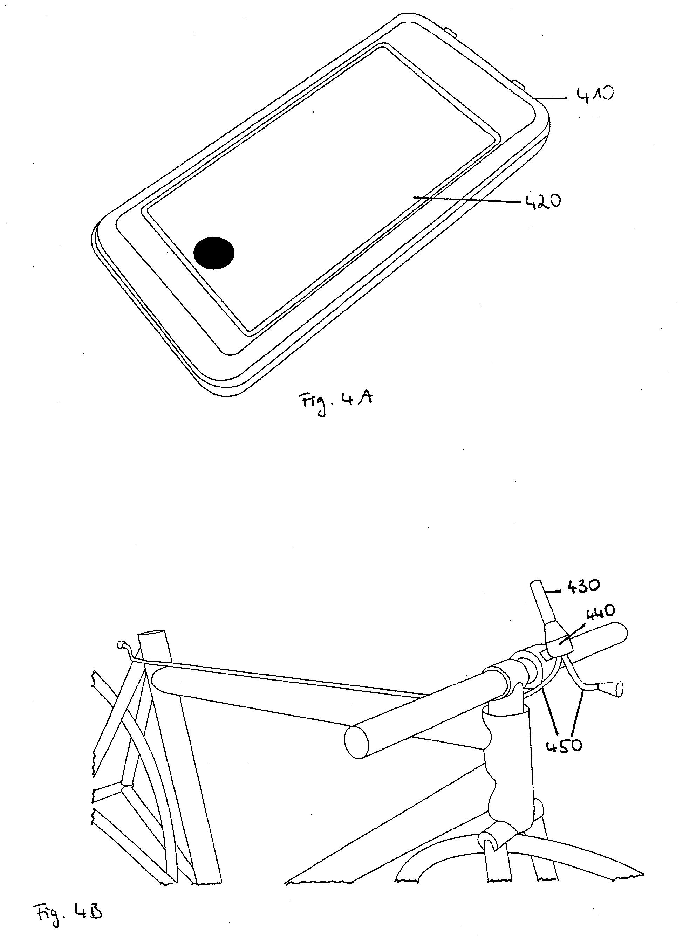

**Figur 4A** zeigt die geschlossene Montageeinrichtung 410 der Figur 3A, in welche das Smartphone 420 erfolgreich aufgenommen wurde.

**Figur 4B** zeigt die Montageeinrichtung 440 der Figur 3B, in welche die Taschenlampe 430 erfolgreich aufgenommen wurde.

**Figur 5** zeigt die Beleuchtungseirichtung 500 der Figur 2 ohne die Montageinrichtung, wie in Figuren 2 bis 4 beschrieben. Die Beleuchtungseinrichtung 500 zeigt beispielhaft zwei Lichtführelemente 510, an welche jeweils ein Strahlformungselement 520 angebracht ist. Zudem zeigt Figur 5 die Hülse 530, welche unterhalb der Montageeinrichtung zu befestigen ist. Beide Lichtführelemente 510 sind von der Hülse aufgenommen.

Die beispielhafte Beleuchtungseinrichtung 500 der Figur 5 weist zwei Lichtführelemente 510 auf, welche derart von der Hülse 530 aufgenommen wurden, dass - nachdem die Hülse 530 an unterhalb der Öffnung der Montageeinrichtung befestigt wurde - das durch die externe Lichtquelle einfallende Licht zumindest teilweise derart in die zwei Lichtführelemente 510 eingespeist und derart aus den zwei oder mehr Lichtführelementen 510 über die Strahlformungselemente 520 austreten können, dass das austretende Licht als Beleuchtung für das Fahrrad dienen kann. Beispielsweise kann das austretende Licht über die zwei Lichtführelemente 510 jeweils derart aus den Strahlformungselementen 520 austreten, dass es als jeweils ein Vorderlicht sowie ein Rücklicht für das Fahrrad verwendet werden kann.

Allerdings ist das vorliegende Beispiel nicht auf die Aufnahme von zwei Lichtführelementen beschränkt. Vielmehr kann eine beliebige Anzahl von Lichtführelementen 520 von der Hülse 530 aufgenommen werden.

**Figur 6A** zeigt beispielhaft die Aufnahme zweier Lichtführelemente 610 durch eine Hülse 620, wie in Figur 5 beschreiben. Auch hier gilt, dass das vorliegende Beispiel nicht auf die Aufnahme von zwei Lichtführelementen 610 beschränkt ist. Vielmehr kann eine beliebige Anzahl von Lichtführelementen von der Hülse aufgenommen werden, wie in Figur 7 beispielhaft aufgezeigt wird.

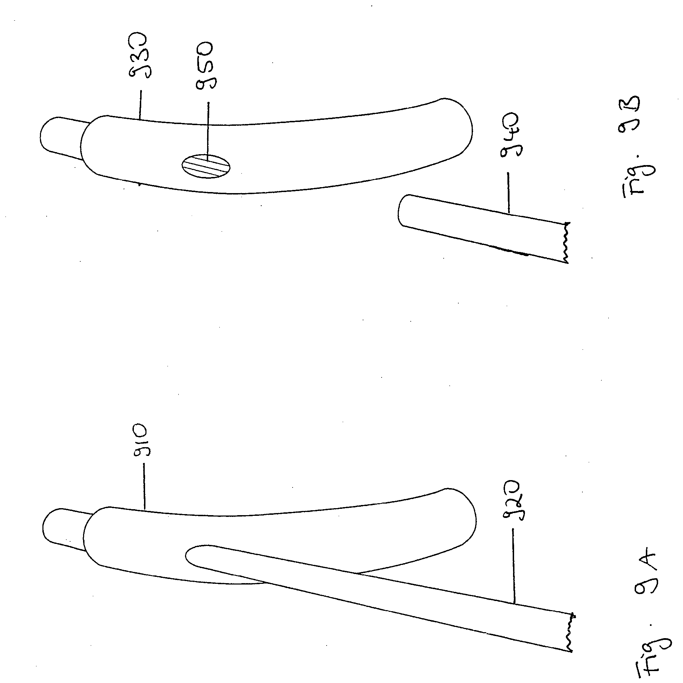

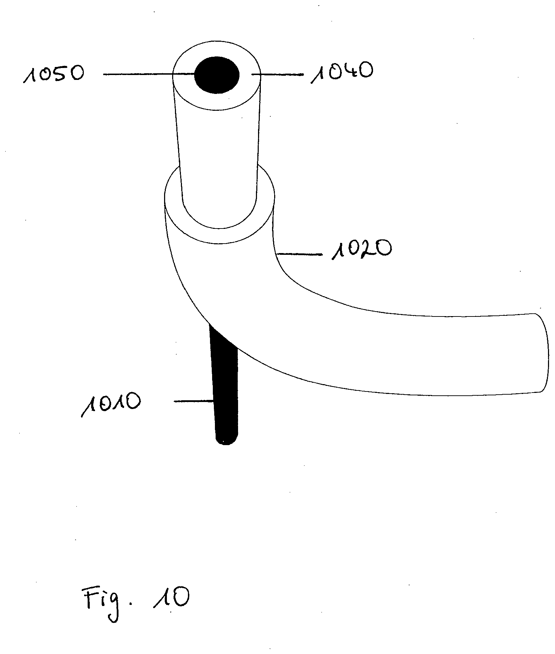

**Figur 6B** zeigt ein weiteres Beispiel einer Beleuchtungseinrichtung. Dieses Beispiel zeigt einen Teil der Beleuchtungseinrichtung wie mit Bezug auf Figuren 9A, 9B und 10 beschrieben. Insbesondere zeigt die Figur beispielhaft die Aufnahme zweier Lichtführelemente 630, 640 durch ein erstes Magnet bzw. Neodym-Magnet bzw. Neodym-Eisen-Bor-Magnet 650. Ferner zeigt die Figur die Aufnahme zweier weiterer Lichtführelemente 630, 640 durch ein zweites Magnet bzw. Neodym-Magnet bzw. Neodym-Eisen-Bor-Magnet 650. Die Länge der beiden weiteren Lichtführelemente kann in diesem Beispiel einer Höhe des zweiten Magnets 650 entsprechen. Ein Durchmesser der beiden weiteren Lichtführelemente kann dem Durchmesser der vom ersten Magnet 650 aufgenommenen Lichtführelemente entsprechen.

Alternativ dazu kann der zweite Magnet 650 lediglich eine Aussparung beinhalten, deren Durchmesser dem Durchmesser der vom ersten Magnet 650 aufgenommenen Lichtführelemente entspricht. In diesem Fall wird der zweite Magnet 650 derart an der Montageeinrichtung angebracht, dass das von der externen Lichtquelle abgestrahlte Licht zumindest teilweise die Aussparung des zweiten Magnets 650 passieren kann. Der zweite Magnet 650 kann derart mit dem ersten Magnet 650 verbunden werden, dass das von der externen Lichtquelle abgestrahlte Licht zumindest teilweise die Aussparung des zweiten Magnets 650 passieren und in die zwei Lichtführelemente 6, 640 einstrahlen bzw. eingekoppelt werden kann. So kann das aus den Lichtführelementen austretende Licht als Beleuchtung für das Fahrrad dienen.

Beispielsweise kann der zweite Magnet 650 derart an der Montageeinrichtung angebracht werden, dass das von einer externen Lichtquelle abgestrahlte, durch eine Öffnung der Montageeinrichtung einfallende Licht wenigstens teilweise in die zwei weiteren Lichtführelemente 630, 640 eingespeist bzw. eingekoppelt wird. Beispielsweise kann der zweite Magnet 650 am ersten Magnet 650 derart angebracht werden, dass das aus den zwei weiteren Lichtführelementen 630, 640 eingespeiste bzw. eingekoppelte Licht derart austreten kann, dass es in die zwei Lichtführelemente 630, 640, die vom ersten Magnet 650 aufgenommen sind, zumindest teilweise eingespeist bzw. eingekoppelt wird. Insbesondere kann das Licht derart eingekoppelt werden, dass es aus den zwei Lichtführelementen 630, 640 austreten kann, so dass das austretende Licht als Beleuchtung für das Fahrrad dienen kann.

Dieses Beispiel zeigt eine simple Befestigungsmöglichkeit der Lichtführelemente 630, 640 an der Montageeinrichtung. Diese Befestigungsmöglichkeit hat den Vorteil, dass die Montageeinrichtung nach der Fahrt beliebig vom Fahrrad abgenommen bzw. vor Fahrtantritt beliebig am Fahrrad angebracht werden kann. Ferner hat dieses Beispiel den Vorteil, dass durch Drehen bzw. Rotieren des ersten Magneten die Austrittsrichtung der aus den Lichtführelementen austretenden Lichts eingestellt werden kann. Ein weiterer Vorteil dieses Beispiels liegt darin, dass die Lichtführelemente mit den dazugehörigen Strahlformungselementen flexibel an verschiedene Montageeinrichtungen, die jeweils dazu geeignet sind, verschiedene Externe Lichtquellen aufzunehmen, angebracht werden können.

**Figur 7** zeigt als weiteres Beispiel, neun Lichtführelemente 710, welche von einer Hülse 720 aufgenommen wurden. In diesem Beispiel werden aus den neun Lichtführelementen 710 zwei Bündel 730, 740 von Lichtführelementen 710 gebildet. Das erste Bündel 730 von Lichtführelementen 710 besteht aus fünf einzelnen Lichtführelementen 710, das zweite Bündel 740 von Lichtführelementen 7besteht aus vier einzelnen Lichtführelementen 710.

Alternativ dazu können die neun Lichtführelemente 710 von einem Magneten aufgenommen werden (nicht in Figur 7 gezeigt), wie mit Bezug auf Figur 6B beschrieben.

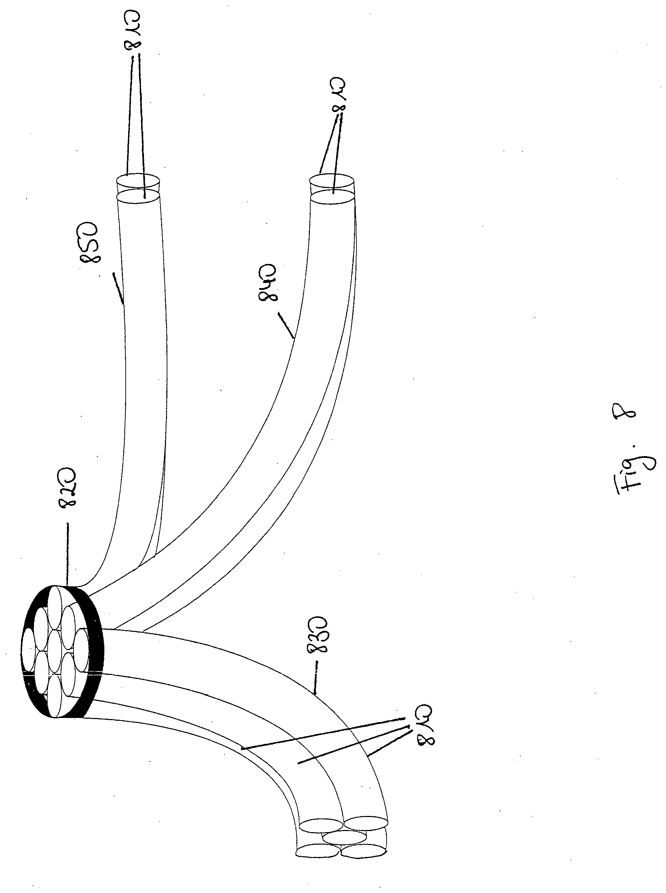

Gemäß des vorliegenden Beispiels können die zwei Bündel 730, 740 von Lichtführelementen 710 aus einer beliebigen Anzahl an Lichtführelementen gebildet werden. Zudem kann eine beliebige Vielzahl an Bündel von Lichtführelementen gebildet werden, wie mit Bezug auf Figur 8 weiter unten beispielhaft veranschaulicht wird. Jedes Bündel von Lichtführelementen kann an eine Position am Fahrrad bzw. seinem Anhänger verlegt werden, an welche das von den Lichtführelementen austretende Licht benötigt bzw. gewünscht ist.

**Figur 8** zeigt als weiteres Beispiel neun Lichtführelemente, welche von einer Hülse 820 aufgenommen werden. In diesem Beispiel werden aus den neun Lichtführelementen 810 drei Bündel 830, 840, 850 von Lichtführelementen 810 gebildet. Das erste Bündel 830 von Lichtführelementen 810 besteht aus fünf einzelnen Lichtführelementen 810, das zweite sowie das dritte Bündel 840 ,850 von Lichtführelementen 810 bestehen aus jeweils zwei Lichtführelementen 810.

Alternativ dazu können die neun Lichtführelemente 810 von einem Magneten aufgenommen werden (nicht in Figur 8 gezeigt), wie mit Bezug auf Figur 6B beschrieben.

**Figur 9A** zeigt ein weiteres Beispiel für einen Teil einer Beleuchtungseinrichtung gem. Figur 2. Insbesondere zeigt sie ein erstes Lichtführelement 910, an welchem ein zweites Lichtführelement 920 angebracht ist. Bei dem ersten Lichtführelement 910 handelt es sich beispielsweise um ein gebogenes, starres Lichtführelement aus Acrylglas bzw. Polymethylmethacrylat bzw. PMMA. An dem gebogenen, starren Lichtführelement kann ein zweites, biegsames Lichtführelement angebracht sein.

Ein Ende des gebogenen, starren Lichtführelements 910 kann derart unterhalb bzw. an einer Öffnung der Montageeinrichtung befestigt werden (nicht in Figur 9A gezeigt), dass das zumindest teilweise in die Öffnung der Montageeinrichtung einstrahlende Licht zumindest teilweise in das gebogene, starre Lichtführelement 910 eingespeist bzw. eingekoppelt werden kann. Das in das gebogene, starre Lichtführelement 910 eingespeiste bzw. eingekoppelte Licht kann zumindest teilweise in das zweite, biegsame Lichtführelement 920 eingekoppelt bzw. eingestrahlt werden und derart aus den beiden Lichtführelementen 910, 920 austreten, dass das austretende Licht als Beleuchtung für das zumindest teilweise muskelbetriebene Fahrzeug bzw. dessen Anhänger dienen kann.

An einem zweiten Ende des gebogenen, starren Lichtführelements 910 kann ein Strahlformungselement, z.B. eine Linse oder ein weißer LED-Reflektor, derart angebracht werden, dass das Strahlformungselement die Form und/oder Richtung des aus dem Lichtführelement austretenden Lichts einstellen bzw. bündeln kann, dass es als Vorderlicht für das Fahrrad dienen kann.

Das zweite Lichtführelement 920 kann an ein hinteres Ende des Fahrrades verlegt werden. Beispielsweise kann es verlegt werden, indem es mithilfe von Kabelbefestigungselementen angebracht wird. Der Begriff Kabelbefestigungselement umfasst, Kabelbinder, Kabelklemmbügel, Druckschellen sowie jegliche Art von Kabelführungselementen. An dem zweiten Lichtführelement 920 kann ein zweites Strahlformungselement, z.B. eine rote Linse oder ein roter LED-Reflektor, derart angebracht werden, dass es das aus dem zweiten Lichtführelement austretende Licht einstellen bzw. bündeln kann, so dass es als Rücklicht für das Fahrrad dienen kann.

Alternativ dazu kann am zweiten Lichtführelement 920 ein rot fluoreszierender Acrylglas bzw. Polymethylmethacrylat bzw. PMMA-Stab bzw. ein roter fluoreszierender Plexistab derart angebracht werden, dass das aus dem zweiten Lichtführelement 920 austretende Licht zumindest teilweise in den fluoreszierenden Plexistab eingespeist wird. An diesem kann dann ein Strahlformungselement, z.B. eine Linse oder ein LED-Reflektor, angebracht werden, so dass das aus dem fluoreszierenden Plexistab austretende, rote Licht derart eingestellt bzw. gebündelt werden kann, dass es als Rücklicht für das Fahrrad verwendet werden kann.

Das zweite Lichtführelement 920 kann alternativ an ein Ende des Fahrrades verlegt werden, indem es um den Fahrradrahmen gewickelt wird. Dies hat den Vorteil, dass das zweite Lichtführelement lediglich an einer einzigen Stelle des Fahrrades mit einem Befestigungselement befestigt werden muss. Diese Befestigungsvariante hat den Vorteil, dass sie besonders kostengünstig ist.

Das vorliegende Beispiel ist nicht auf die Verwendung von zwei Lichtführelementen beschränkt. Vielmehr kann eine beliebige Anzahl an Lichtführelementen zu einem Bündel von Lichtführelementen gebildet bzw. zusammengefasst werden. Das Bündel von Lichtführelementen kann in diesem Beispiel den zweiten Lichtleiter ersetzen und kann an jenen Ort am Fahrrad bzw. seinem Anhänger verlegt werden, an welchem das durch das Bündel von Lichtführelementen austretende Licht als Beleuchtung für das Fahrrad benötigt bzw. gewünscht wird.

Ein wesentlicher Vorteil dieses Beispiels liegt darin, dass das gebogene Lichtführelement 910 an der Montageeinrichtung beispielsweise durch Stecken angebracht werden kann. Alternativ dazu kann der gebogene Lichtleiter 910 mithilfe von Magneten an der Montageeinrichtung angebracht werden, wie mit Bezug auf Figur 6B beschrieben.

Diese Beispiele haben den Vorteil, dass die Lichtführelemente 910, 920 zusammen mit den Strahlformungselementen nach einer Fahrradfahrt wieder von der Montageeinrichtung entfernt und mitgenommen werden können.

Ein weiterer Vorteil dieser Beispiele liegt darin, dass keine Hülse und kein Schwanenhals benötigt werden, um die Lichtführelemente 910, 920 an der Montageeinrichtung anzubringen. Dadurch werden in diesem Beispiel die Kosten für die Beleuchtungseinrichtung minimiert.

**Figur 9B** veranschaulicht erneut den Teil der Beleuchtungseinrichtung wie mit Bezug auf Figur 9A erläutert. An diesem Teil der Beleuchtungseinrichtung kann das zweite Lichtführelement 940 über eine Aussparung 950 von dem gebogenen, starren Lichtführelement 930 derart aufgenommen werden, dass das in das gebogene Lichtführelement 930 zumindest teilweise eingespeiste bzw. eingekoppelte Licht zumindest teilweise in das zweite Lichtführelement 940 aufgenommen werden kann. Das zweite Lichtführelement 940 kann über die Aussparung 950 beliebig von dem starren Lichtführelement 930, beispielsweise durch stecken, aufgenommen bzw. von diesem wieder entfernt werden. Dies hat den Vorteil, dass die Beleuchtungseinrichtung flexibel entweder nur als Vorderlicht oder als Vorder-und Rücklicht für das Fahrrad verwendet werden kann.

Vorzugsweise kann das zweite Strahlformungselement 940 mithilfe eines Winkelförmigen Befestigungselements am Fahrrad befestigt werden. Die Befestigung am Fahrrad kann mithilfe einer diebstahlsicheren Schraube bzw. Kodierschraube erfolgen, mit welcher die Beleuchtungseinrichtung diebstahlsicher angebracht werden kann. Der Begriff Kodierschraube umfasst eine Schraube, welche nur mit einem bestimmten Schraubenschlüssel bzw. Schraubenzieher mit einer auf die verwendete Schraube angepassten Form montiert bzw. demontiert werden kann.

Vorzugsweise kann die Montage aller Beispielhaften Beleuchtungseinrichtungen mithilfe von Kodierschrauben erfolgen.

**Figur 10** veranschaulicht den Teil der Beleuchtungseinrichtung, wie mit Bezug auf die Figuren 9A und 9B erläutert. Insbesondere kann hier ein Ende des starren Lichtführelements 1020 derart an der Montageeinrichtung des Fahrrades angebracht werden, dass das von der externen Lichtquelle abgestrahlte Licht zumindest teilweise in das starre Lichtführelement 1020 eingespeist bzw. eingekoppelt werden und somit auch zumindest teilweise in das zweite Lichtführelement 1010 eingekoppelt werden.

Beispielsweise können die beiden Lichtführelemente 1020, 1010 mithilfe zweier Magneten, wie oben mit Bezug auf Figur 6B beschrieben, an der Montageeinrichtung angebracht werden.

Das starre Lichtführelement 1020 kann derart an der Montageeinrichtung angebracht werden, dass seine Position durch Drehen bzw. Rotieren verändert werden kann. Dies hat den Vorteil, dass die Austrittsrichtung des aus dem starren Lichtführelement 1020 austretenden und über das Strahlformungselement eingestellten bzw. gebündelten Lichts durch Drehung bzw. Rotation des starren Lichtführelements eingestellt werden kann.

Das zweite Lichtführelement 1010 kann am Fahrrad bzw. seinem Anhänger an einen Ort verlegt werden (nicht in Figur 10 gezeigt), an welchem das durch das Lichtführelement austretende Licht als weitere Lichtquelle benötigt bzw. gewünscht wird (nicht in Figur 10 gezeigt). So kann das zweite Lichtführelement 1010 beispielsweise an ein hinteres Ende des Fahrrades verlegt werden. Ferner kann ein zweites Strahlformungselement, beispielsweise eine rote Linse oder ein roter LED-Reflektor, derart an dem zweiten Lichtführelement 1010 angebracht werden, dass die Form und/oder Richtung des aus dem zweiten Lichtführelement 1010 ausstrahlenden Lichts derart gebündelt werden kann, dass es als Rücklicht für das Fahrrad bzw. dessen Anhänger verwendet werden kann.

Alternativ dazu kann am zweiten Lichtführelement 1010 ein rot fluoreszierender Acrylglas bzw. Polymethylmethacrylat bzw. PMMA-Stab bzw. ein roter fluoreszierender Plexistab derart angebracht werden, dass das aus dem zweiten Lichtführelement austretende Licht in den fluoreszierenden Plexistab zumindest teilweise eingespeist wird. Am Plexistab kann dann ein Strahlformungselement, z.B. eine Linse oder ein LED-Reflektor, angebracht werden, so dass das aus dem fluoreszierenden Plexistab austretende, rote Licht derart eingestellt bzw. gebündelt werden kann, dass es Rücklicht für das Fahrrad verwendet werden kann.

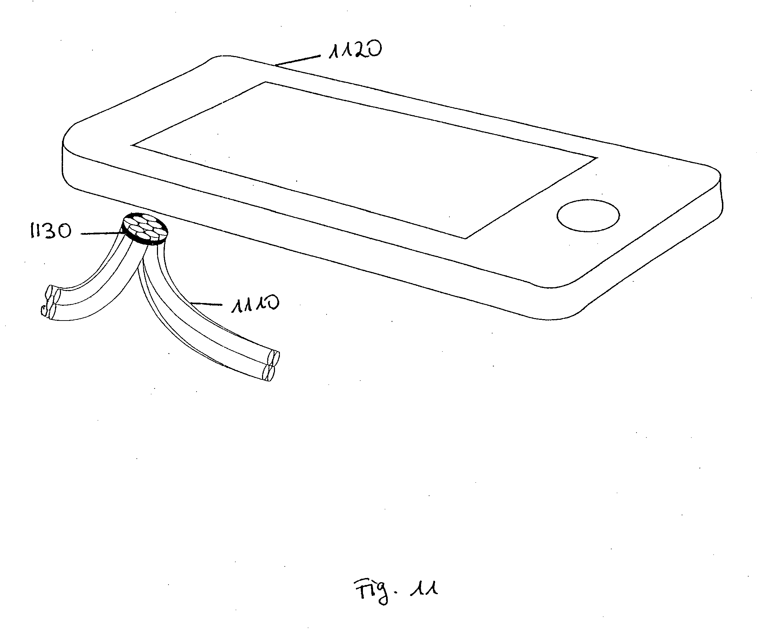

**Figur 11** zeigt eine Montageeinrichtung wie in Figur 4A gezeigt, von welcher ein mobiles Endgerät bzw. Smartphone derart aufgenommen wurde, dass eine Öffnung der Montageeinrichtung einer in das mobile Endgerät bzw. Smartphone integrierten Lichtquelle entspricht. So kann das von der Lichtquelle abgestrahlte Licht zumindest teilweise durch die Öffnung der Montageeinrichtung strahlen.

Vorzugsweise ist bei der Öffnung der Montageeinrichtung eine Linse bzw. ein geeignetes optisches Element angebracht (nicht in Figur 11 gezeigt), so dass das von der Lichtquelle abgestrahlte Licht geeignet optisch beeinflusst, z.B. gebündelt werden kann.

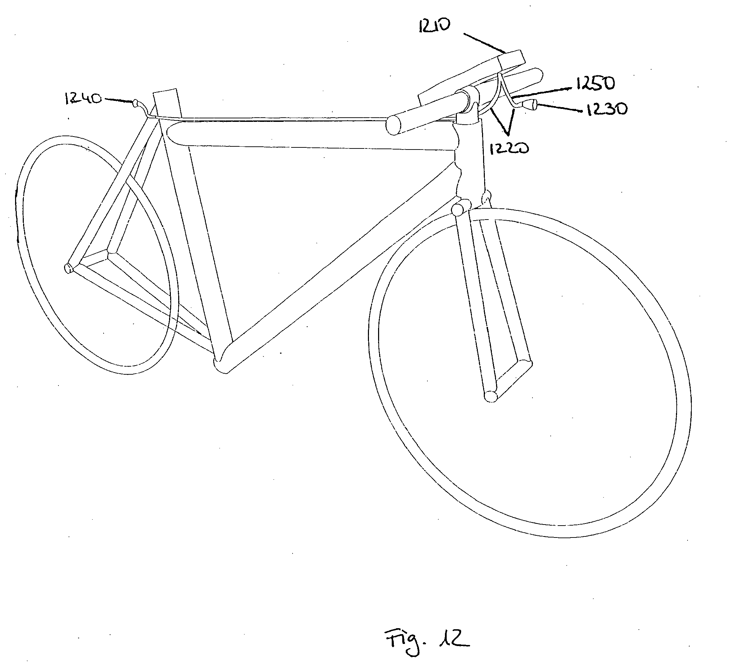

Vorzugsweise umfasst die Beleuchtungseinrichtung 1120 eine Hülse 1130, welche unterhalb der Öffnung der Montageeinrichtung zu befestigen ist und dazu geeignet ist, eine beliebige Anzahl von Lichtführelementen 1110 zumindest teilweise aufzunehmen, wie mit Bezug auf Figuren 5 bis 8 beschrieben. Die Lichtführelemente 1110 werden derart von der Hülse 1130 aufgenommen, dass das durch die externe Lichtquelle einfallende Licht zumindest teilweise derart in die zwei oder mehr aufgenommenen Lichtführelemente 1110 eingespeist und derart aus den zwei oder mehr Lichtführelementen 1110 austreten kann, dass das austretende Licht als Beleuchtung für ein Fahrrad bzw. dessen Anhänger dienen kann, wie unten mit Bezug auf Figuren 12 bis 14 beschrieben.

Alternativ dazu kann ein gebogenes, starres Lichtführelement wie mit Bezug auf Figuren 9A, 9B und 10 beschrieben, an der Beleuchtungseinrichtung derart befestigt werden, dass das von der externen Lichtquelle eingestrahlte Licht zumindest teilweise in das starre Lichtführelement sowie in ein zweites Lichtführelement eingespeist bzw. eingekoppelt und derart aus den Lichtführelementen austreten kann, dass das austretende Licht als Beleuchtung für ein Fahrrad bzw. dessen Anhänger dienen kann, wie mit Bezug auf Figuren 12 bis 14 beschrieben. Beispielsweise kann das gebogene, starre Lichtführelement mithilfe von Magneten an der Montageeinrichtung so angebracht werden, wie mit Bezug auf Figur 6B beschrieben.

**Figur 12** zeigt ein Fahrrad, an welchem eine Beleuchtungseinrichtung 1210 angebracht ist. Wie in Figur 12 gezeigt, ist eine Montageeinrichtung, wie in Figuren 1 bis 4 sowie 11 beschrieben, an einer Lenkvorrichtung des Fahrrades angebracht. In diesem Beispiel sind zwei Lichtführelemente mithilfe einer Hülse (nicht in Figur 12 gezeigt) unterhalb einer Öffnung (nicht in Figur 12 gezeigt) 1220 der Montageeinrichtung derart angebracht, dass ein von einer durch die Montageeinrichtung aufgenommenen Smartphone integrierten Lichtquelle abgestrahlte Licht wenigstens teilweise in die zwei Lichtführelemente 1220 eingespeist bzw. eingekoppelt wird. An den zwei Lichtführelementen 1220 ist jeweils ein Strahlformungselement 1230, 1240 angebracht.

Bei dem ersten Strahlformungselement 1230 handelt es sich beispielsweise um eine Linse bzw. einen weißen LED-Reflektor, welcher die Form und/oder Richtung des aus dem ersten Lichtführelement 1220 austretenden Lichts derart einstellen bzw. bündeln kann, dass es sich als Vorderlicht für das Fahrrad eignet. Optional ist das erste Lichtführelement 1220 in einem Schwanenhals 1250 verlegt. Somit kann durch Bewegung des Schwanenhalses 1250 die Austrittsrichtung des aus dem ersten Lichtführelement 1220 austretenden Lichts eingestellt werden.

Alternativ dazu können das erste und das zweite Lichtführelement 1220 mittels Magneten, wie mit Bezug auf Figur 6B beschrieben, derart an der Montageeinrichtung angebracht werden, dass das vom Smartphone abgestrahlte Licht wenigstens teilweise in die zwei Lichtführelemente 1220 eingespeist bzw. eingekoppelt wird. Bei den Lichtführelementen 1220 kann es sich dabei um Lichtführelemente wie mit Bezug auf Figuren 9A, 9B und 10 beschrieben handeln. In diesem Fall kann die Austrittrichtung des Vorderlichts am Fahrrad durch Bewegung bzw. Rotation des Magneten eingestellt werden.

Bei dem zweiten Strahlformungselement 1240 handelt es sich beispielsweise um eine rote Linse einen roten LED-Reflektor, welcher an einem Ende des zweiten Lichtführelements 1220 angebracht ist. Das zweite Lichtführelement 1220 ist zu einem hinteren Ende des Fahrrades verlegt. Der rote LED-Reflektor bündelt die Form und/oder Richtung des aus dem zweiten Lichtführelement 1220 austretenden Lichts derart, dass es sich als Rücklicht für das Fahrrad eignet. Optional kann ein Teil des zweiten Lichtführelements 1220 an dem Ende, an welchem das Strahlformungselement 1240 angebracht ist, derart von einem zweiten Schwanenhals aufgenommen sein (nicht in Figur 12 gezeigt), dass die Austrittsrichtung des aus dem zweiten Lichtführelement 1220 austretenden Lichts durch Bewegung des zweiten Schwanenhalses eingestellt werden kann.

Alternativ dazu kann am zweiten Lichtführelement 1220 ein rot fluoreszierender Acrylglas bzw. Polymethylmethacrylat bzw. PMMA-Stab bzw. ein rot fluoreszierender Plexistab derart angebracht werden, dass das aus dem zweiten Lichtführelement 1220 austretende Licht in den fluoreszierenden Plexistab zumindest teilweise eingespeist wird. An diesem kann dann ein Strahlformungselement 1240, z.B. eine Linse oder ein LED-Reflektor, angebracht werden, so dass das aus dem fluoreszierenden Plexistab austretende, rote Licht derart eingestellt bzw. gebündelt werden kann, dass es Rücklicht für das Fahrrad verwendet werden kann.

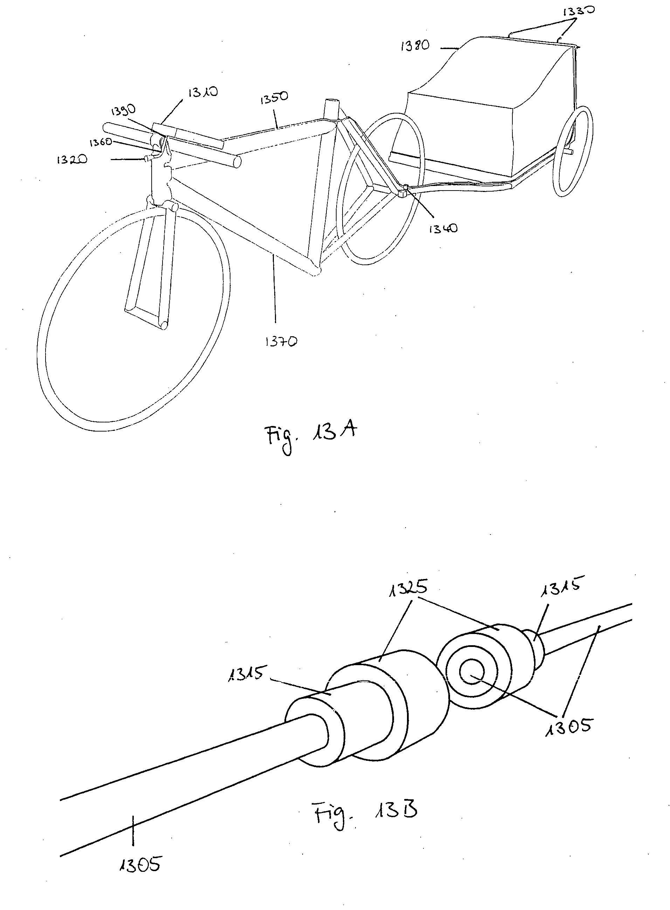

**Figur 13A** zeigt die oben beschriebene Beleuchtungseinrichtung 1310, die an einem Fahrrad 1370 und dessen Anhänger 1380 angebracht ist. Eine Montageeinrichtung, wie in Figuren 1 bis 4 sowie 11 beschrieben, ist an einer Lenkvorrichtung des Fahrrades 1370 angebracht. Zwei Lichtführelemente 1350 sind von einer Hülse 1390 aufgenommen, welche unterhalb einer Öffnung (nicht in Figur 13A gezeigt) der Montageeinrichtung derart angebracht ist, dass ein von einer in einem Smartphone - welches von der Montageeinrichtung aufgenommen ist - integrierten Lichtquelle abgestrahlte Licht wenigstens teilweise in die zwei Lichtführelemente 1350 eingespeist bzw. eingekoppelt wird.

Ein erstes Lichtführelement 1350 ist in einem Schwanenhals 1360 verlegt. An dem ersten Lichtführelement 1350 ist ein Strahlformungselement 1320 angebracht. Bei dem ersten Strahlformungselement 1320 handelt es sich beispielsweise um einen weißen LED-Reflektor, welcher die Form und/oder Richtung des aus dem ersten Lichtführelement 1350 austretenden Licht derart einstellen bzw. bündeln kann, dass es sich als Vorderlicht für das Fahrrad 1380 eignet. Zudem kann durch Bewegung des Schwanenhalses 1360 die Austrittsrichtung des Vorderlichts am Fahrrad eingestellt werden.

Alternativ dazu können das erste und das zweite Lichtführelement 1350 mittels Magneten, wie weiter oben mit Bezug auf Figur 6B beschrieben, derart an der Montageeinrichtung angebracht werden, dass das vom Smartphone abgestrahlte Licht wenigstens teilweise in die zwei Lichtführelemente 1350 eingespeist bzw. eingekoppelt wird. Bei den Lichtführelementen kann es sich dabei um Lichtführelemente 1350 wie mit Bezug auf Figuren 9A, 9B und 10 beschrieben handeln. In diesem Fall kann die Austrittrichtung des Vorderlichts am Fahrrad durch Bewegung bzw. Rotation eines Magneten eingestellt werden.

An einem zweiten Lichtführelement 1350 sind zwei Strahlformungselemente angebracht 1330. Optional handelt es sich bei dem zweiten Lichtführelement 1350 um zwei Separate Lichtführelemente, an denen jeweils ein Strahlformungselement 1330 angebracht ist.

Bei den zwei Strahlformungselementen 1330 handelt es sich beispielsweise um zwei rote Linsen bzw. zwei rote LED-Reflektoren. Das zweite Lichtführelement 1350 ist zu einem hinteren Ende des Fahrradanhängers 1380 verlegt, so dass die Form und/oder Richtung des von dem zweiten Lichtführelements 1350 austretenden Lichts derart von den zwei Strahlformungselemente 1330 eingestellt bzw. gebündelt wird, dass das eingestellte bzw. gebündelte Licht als Rücklicht für das Fahrrad mit Anhänger dienen kann.

Optional ist an den Enden des zweiten Lichtführelements 1350, an welchen die zwei Strahlformungselemente 1330 angebracht sind, das zweite Lichtführelement 1350 von einem zweiten und/oder einem dritten Schwanenhals aufgenommen (nicht in Figur 13A gezeigt), so dass die Austrittsrichtung des von den beiden Strahlformungselementen 1330 abgestrahlten Lichts durch Bewegung des zweiten bzw. dritten Schwanenhalses eingestellt werden kann.

Alternativ dazu können am zweiten Lichtführelement 1350 zwei rote, fluoreszierende Acrylglas bzw. Polymethylmethacrylat bzw. PMMA-Stäbe bzw. zwei rote fluoreszierender Plexistäbe derart angebracht werden, dass das aus dem zweiten Lichtführelement 1350 austretende Licht zumindest teilweise in die fluoreszierenden Plexistäbe eingespeist bzw. eingekoppelt wird. An diesen können jeweils ein Strahlformungselement 1330, z.B. eine Linse oder ein LED-Reflektor, angebracht werden, so dass das aus dem fluoreszierenden Plexistäben austretende, rote Licht derart eingestellt bzw. gebündelt werden kann, dass es Rücklicht bzw. Bremslicht für das Fahrrad verwendet werden kann.

Optional wird das zweite Lichtführelement 1350 mittels eines entsprechenden Steckverbinders, beispielsweise einer Kupplung für Lichtwellenleiter, verlängert. Dieses Beispiel hat den Vorteil, dass das zweite Lichtführelement in verlängerter Form, also wenn es über die Kupplung verlängert wird, eine Rückbeleuchtung für den Fahrradanhänger 1380 ermöglicht, wohingegen er in kurzer Form (d.h. die Verlängerung über die Kupplung wird wieder Abgenommen), als Rückbeleuchtung für das Fahrrad 1370 wie mit Bezug auf Figur 12 beschrieben dienen kann. In diesem Fall müsste das zweite Lichtführelement nur wieder wie mit Bezug auf Figur 12 beschrieben verlegt und mit einem entsprechenden Strahlformungselement versehen werden.

**Figur 13B** zeigt ein weiteres Beispiel eines Steckverbinders für Lichtführelemente, um eine bestehendes Lichtführelement 1305 zu verlängern. In diesem Beispiel sind die zu verbindenden Enden der Lichtführelemente 1305 jeweils von einer Hülse bzw. Führungshülse 1315 aufgenommen. Jede der Führungshülsen 1315 ist zusätzlich von einem Magneten bzw. Neodym-Magneten bzw. Neodym-Eisen-Bor-Magneten 1325 aufgenommen. So kann beispielsweise das zweite Lichtführelement 1305 wie mit Bezug auf Figur 13A beschrieben, verlängert werden, indem die zwei Magnete 1325 miteinander verbunden werden.

Dieses Beispiel hat den Vorteil, dass das zweite Lichtführelement 1305 in verlängerter Form, also wenn es mithilfe der Magneten 1325 verlängert ist, eine Rückbeleuchtung für den Fahrradanhänger 1380 ermöglicht, wohingegen er in kurzer Form (d.h. die Verlängerung über die Kupplung wird wieder Abgenommen), als Rückbeleuchtung für das Fahrrad 1370 wie mit Bezug auf Figur 12 beschrieben dienen kann. In diesem Fall müsste das zweite Lichtführelement 1305 nur wieder wie mit Bezug auf Figur 12 beschrieben verlegt und mit einem entsprechenden Strahlformungselement versehen werden.

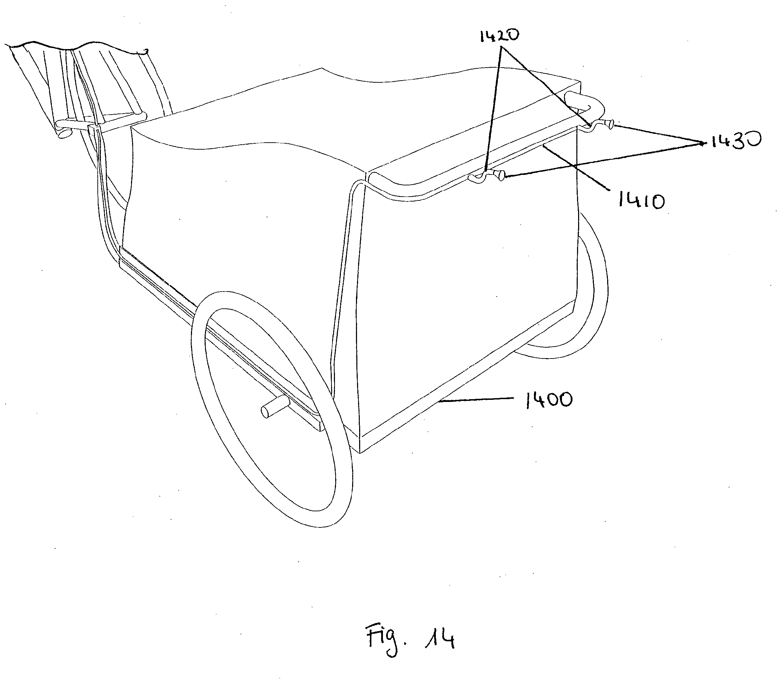

**Figur 14** zeigt einen Teil der Beleuchtungseinrichtung wie mit Bezug auf Figur 13A beschrieben, welcher an dem Fahrradanhänger 1400 angebracht ist.

In diesem Beispiel ist das zweite Lichtführelement 1410 an jenen Bereichen, an welchen die zwei Strahlformungselemente 1430 angebracht sind, in einem zweiten bzw. einem dritten Schwanenhals 1420 verlegt, so dass die Austrittsrichtung des von den beiden Strahlformungselementen 1430 abgestrahlten Lichts durch Bewegung des zweiten bzw. dritten Schwanenhalses 1420 eingestellt werden kann.

Handelt es sich bei dem zweiten Lichtführelement 1410 um zwei separate Lichtführelemente, so ist jeweils eines der separaten Lichtführelemente in jeweils einem Schwanenhals 1420 verlegt.

Alternativ dazu kann das zweite Lichtführelement 1410 an jenen Bereichen, an welchen die zwei Strahlformungselemente 1430 anzubringen sind, jeweils ein gebogenes, starres Lichtführelement aus Acrylglas bzw. Polymethylmethacrylat bzw. PMMA angebracht sein. An den starren Lichtführelementen können ein zweites bzw. ein drittes Strahlformungselement, z.B. eine rote Linse oder ein roter LED-Reflektor, derart angebracht werden, dass sie das aus dem zweiten Lichtführelement austretende Licht einstellen bzw. bündeln können, so dass es als Rücklicht bzw. Bremslicht für das Fahrrad dienen kann.

Alternativ dazu kann an den starren Lichtführelementen jeweils ein rot fluoreszierender Acrylglas bzw. Polymethylmethacrylat bzw. PMMA-Stab bzw. ein roter fluoreszierender Plexistab derart angebracht werden, dass das aus dem zweiten Lichtführelement austretende Licht zumindest teilweise in die fluoreszierenden Plexistäbe eingespeist wird. An diesem kann dann ein Strahlformungselement, z.B. eine Linse oder ein LED-Reflektor, angebracht werden, so dass das aus dem fluoreszierenden Plexistab austretende, rote Licht derart eingestellt bzw. gebündelt werden kann, dass es als Rücklicht für das Fahrrad verwendet werden kann.

Die beschriebene Beleuchtungseinrichtung hat den Vorteil, dass sie von einer Form bzw. Länge eines Fahrrades bzw. dessen Anhängers vollkommen unabhängig ist. Die benötigten Lichtführelemente können flexibel an jene Stellen am Fahrrad bzw. dessen Anhänger verlegt werden, an denen eine Beleuchtung für das Fahrrad bzw. dessen Anhänger benötigt bzw. gewünscht ist. Ferner benötigt die Beleuchtungseinrichtung lediglich eine zentrale Lichtquelle für die Beleuchtung.

Es kann eine beliebige Anzahl von Lichtführelementen verwendet werden, so dass das von der externen Lichtquelle eingespeiste bzw. eingestrahlte bzw. eingekoppelte Licht jeweils durch einzelne Lichtführelemente oder durch Bündel von Lichtführelementen an den jeweiligen Strahlenformungselementen austreten kann.

Über eine Konventionelle Beleuchtung (Vorderlicht und Rücklicht) hinaus kann jedes beliebige Strahlformungselement an jeder beliebigen Stelle des Fahrrades bzw. dessen Anhängers angebracht werden. So kann das Strahlformungselement eine beliebige ausleuchtbare Figur darstellen, welche das von einem Lichtführelement bzw. einem Bündel von Lichtführelementen ausgestrahlte Licht aufnehmen, formen bzw. bündeln und entsprechend geformt bzw. gebündelt zumindest teilweise ausstrahlen kann.

Ein weiterer Vorteil der oben beschriebenen Beleuchtungseinrichtung liegt darin, dass die am Fahrrad bzw. dessen Anhänger verlegten Lichtführelemente aus Materialien wie Quarzglas, Kunststoff oder Siliziumdioxid, bestehen. Somit leuchten die Lichtführelemente selbst, wenn die zentrale Lichtquelle Licht in diese abstrahlt. Daher stellen die verlegten Lichtführelemente einen weiteren Sicherheitsaspekt für Fahrräder im Straßenverkehr dar.

### Steuerung der oben beschriebenen Beleuchtungseinrichtung

Die beschriebene Beleuchtungseinrichtung kann ferner mithilfe einer Anwendung bzw. Applikation bzw. App, welche ein Verfahren zur Steuerung der Beleuchtungseinrichtung implementiert, über ein mobiles Endgerät bzw. Smartphone, welches von der Montageeinrichtung aufgenommen wird gesteuert werden.

Ein Benutzer bzw. Fahrradfahrer kann, bevor oder nachdem ein Smartphone bzw. mobiles Endgerät von der Montageeinrichtung aufgenommen wurde, die Anwendung z.B. durch ein Antippen eines entsprechenden Icons auf einem Touchscreen des Smartphones, aktivieren.

Nach erfolgreicher Aktivierung werden von dem mobilen Endgerät Beschleunigungsdaten mittels eines in dem Smartphone integrierten Beschleunigungssensors erfasst. Die Applikation steuert daraufhin die Beleuchtungseinrichtung in Abhängigkeit der erfassten Beschleunigungsdaten.

In einer bevorzugten Ausführungsform wird eine in dem mobilen Endgerät integrierte Lichtquelle aktiviert, falls die erfassten Beschleunigungsdaten eine spezielle, für die Beschleunigung repräsentative Größe überschreiten bzw. unterschreiten. Eine für die Beschleunigung repräsentative Größe beinhaltet die internationale Einheit bzw. SI-Einheit für die Beschleunigung: a̅=m/s². Allerdings kann sie jede andere, für die Beschleunigung repräsentative Größe, beispielsweise nach dem CGS (Centimetre Gram Second), nach dem Planck-Einheitssystem oder nach dem Angloamerikanischen Maßsystem beinhalten.

So kann beispielsweise festgelegt werden, dass wenn eine Bremsbeschleunigung einen gewissen Wert überschreitet, die Lichtquelle des Smartphones aktiviert wird. Somit kann bei der beispielhaften Beleuchtungseinrichtung, wie mit Bezug auf Figur 12 beschrieben, das von der Lichtquelle abgestrahlte Licht in die beiden Lichtführelemente eingespeist bzw. eingestrahlt bzw. eingekoppelt werden, so dass das Vorderlicht sowie das Rücklicht aufleuchten. Dies hat den Vorteil, dass alle das Fahrrad umgebenden Fahrzeuge im Straßenverkehr durch die Aktivierung des Vorder-und Rücklichts gewarnt werden, so dass sich die Sicherheit des Fahrradfahrers erhöht.

Zusätzlich bzw. alternativ kann bei einer Überschreitung einer Bremsbeschleunigung eine Stroboskopfunktion der Lichtquelle aktiviert werden. Dies hat den Vorteil, dass, für den Fall dass die Lichtquelle des Smartphones bereits aktiviert war, die Nachfolgenden Fahrzeuge im Straßenverkehr durch Aktivierung der Stroboskopfunktion gewarnt werden.

In einer bevorzugten Ausführungsform kann sich eine Blinkfrequenz der Lichtquelle erhöhen, wenn sich eine erfasste Bremsbeschleunigung erhöht. Dadurch erhöht sich die Aufmerksamkeit nachfolgender Verkehrsteilnehmer, so dass die Sicherheit im Straßenverkehr erhöht wird. Da die Lichtführelemente selbst Leuchten bzw. Licht abstrahlen, erhöht sich mit Erhöhung der Blinkfrequenz die Aufmerksamkeit aller Verkehrsteilnehmer.

Eine Kombination dieser Funktionalitäten ist möglich. So kann für den Fall, dass die Lichtquelle des Smartphones noch nicht aktiviert war, bei Überschreitung einer Bremsbeschleunigung die Lichtquelle lediglich aktiviert wird, wobei für den Fall, dass die Lichtquelle des Smartphones bereits aktiviert war, eine Stroboskopfunktion der Lichtquelle aktiviert wird.

Die Aktivierung der Lichtquelle ist jedoch nicht lediglich auf die Bremsbeschleunigung beschränkt. Jedes beliebige, spezielle Ereignis, welches durch den Beschleunigungssensor festgestellt werden kann, kann als Auslöser definiert werden, um die Lichtquelle des Smartphones beliebig anzusteuern. Ein spezielles Ereignis bedeutet hierbei ein spezielles, vorbestimmtes bzw. vorbestimmbares Ereignis.

Zudem kann die Beleuchtungseinrichtung gesteuert werden, indem bestimmte Global Positioning System (GPS) - Positionen in dem mobilen Endgerät als gefährlich eingestufte Positionsdaten hinterlegt bzw. gekennzeichnet werden können. Beispielsweise können GPS-Positionen großer Kreuzungen bzw. unübersichtlicher Straßen mit hohem Verkehrsaufkommen als gefährlich hinterlegt werden. Zum einen kann diese Hinterlegung erfolgen, indem ein Benutzer GPS-Positionen bekannter gefährlicher Straßen bzw. Kreuzungen in das mobile Endgerät eingibt. Dies kann beispielsweise mithilfe einer bereits etablierten Karten-Applikation, z.B. Google Maps, erfolgen, so dass der Benutzer lediglich die gefährliche Straße bzw. Kreuzung auf der Karte anzeigen muss, um die entsprechende Position im mobilen Endgerät als gefährlich zu hiterlegen. Alternativ können GPS-Positionsdaten gefährlicher Straßen und Kreuzungen auf das mobile Endgerät heruntergeladen werden. Allerdings ist die Hinterlegung gefährlicher GPS-Positionen nicht auf diese beiden Varianten beschränkt, sondern kann auf eine Vielzahl alternativer Eingabemöglichkeiten erfolgen. Zudem bzw. alternativ kann jede Kreuzung als gefährliche GPS-Position im Smartphone hinterlegt werden.

Auf Aktivierung der Applikation können GPS - Positionsdaten mittels eines in dem Smartphone integrierten GPS-Sensors erfasst und mit den als gefährlich hinterlegten GPS-Positionen verglichen werden. Falls eine aktuell erfasste GPS-Position einer als gefährlich hinterlegten GPS-Position entspricht, kann die Lichtquelle des Smartphones, und somit auch die Beleuchtungseinrichtung, aktiviert werden. Alternativ kann in diesem Fall eine Stroboskopfrequenz der Lichtquelle, und somit der Beleuchtungseinrichtung, des Smartphones aktiviert werden. In einem weiteren Beispiel kann die Lichtquelle aktiviert werden, falls diese vor Erreichen der als gefährlich eingestuften GPS-Position noch nicht aktiviert war. Falls die Lichtquelle bereits vor Erreichen dieser GPS-Position aktiviert war, kann die Stroboskopfunktion der Lichtquelle aktiviert werden. Dadurch verringert sich die Wahrscheinlichkeit, dass Fahrradfahrer an gefährlichen, unübersichtlichen und/oder vielbefahrenen Kreuzungen übersehen werden. Somit wird die Sicherheit von Fahrradfahrern im Straßenverkehr erhöht.

Alternativ bzw. zusätzlich dazu kann eine Leuchtintensität der Lichtquelle, und somit auch der Beleuchtungseinrichtung, in Abhängigkeit von einer speziellen, d.h. vorbestimmten bzw. vorbestimmbaren Gefahrenstufe einer erfassten GPS-Position gesteuert werden. Dabei kann zusätzlich zur Hinterlegung einer GPS-Position als gefährliche GPS-Position, wie oben beschrieben, auch eine Gefahrenstufe für jede GPS-Position definiert werden. Beispielsweise kann eine Gefahrenstufe als hoch, mittel und gering definiert werden. Entsprechend kann sich die Leuchtintensität mit Erhöhung der Gefahrenstufe erhöhen.

Alternativ bzw. zusätzlich umfasst die Steuerung der Beleuchtungseinrichtung auch das Erfassen von Helligkeitsdaten mittels eines in das mobile Endgerät bzw. Smartphone integrierten Lichtsensors bzw. Photozelle. Falls eine für die Helligkeit repräsentative Größe einen speziellen Schwellenwert überschreitet, wird die Lichtquelle des Smartphones, und somit die Beleuchtungseinrichtung, aktiviert. Ein spezieller Schwellenwert umfasst einen vorbestimmten bzw. vorbestimmbaren Schwellenwert.

Beispielsweise kann die Lichtquelle des Smartphones, und somit die Beleuchtungseinrichtung, aktiviert werden, falls gemessene Helligkeitsdaten einen bestimmten bzw. bestimmbaren Helligkeitswert unterschreiten und wieder ausgeschaltet werden, falls die gemessenen Helligkeitsdaten den bestimmten bzw. bestimmbaren Helligkeitswert wieder überschreiten. Durch das Einschalten der Lichtquelle und somit der Beleuchtungseinrichtung wird im Falle der beispielhaften Beleuchtungseinrichtung wie in Figur 12 beschrieben, das von der Lichtquelle abgestrahlte Licht in die beiden Lichtführelemente eingespeist bzw. eingestrahlt bzw. eingekoppelt, so dass das Vorderlicht sowie das Rücklicht leuchten.

Dies hat den Vorteil, dass sich das Licht auch beim Einfahren in eine Unterführung automatisch einschalten sowie bei Verlassen der Unterführung automatisch ausschalten kann.

Zudem oder alternativ dazu kann eine Leuchtintensität der Lichtquelle, und somit auch der Beleuchtungseinrichtung, in Abhängigkeit von den erfassten Helligkeitsdaten gemäß spezieller Helligkeitswerte gesteuert werden. Der Begriff spezieller Helligkeitswert umfasst vorbestimmte bzw. vorbestimmbare Helligkeitswerte. So kann beispielsweise bei Morgen- und Abenddämmerung eine geringere Lichtintensität gewählt werden als bei vollkommener Dunkelheit. Dies hat den Vorteil, dass der Akkuverbrauch des Smartphones durch die geringere Leuchtintensität der Lichtquelle bei Morgen- und Abenddämmerung geringer ist als wenn stets dieselbe, volle Leuchtintensität verwendet würde.

Zudem oder alternativ dazu kann die Lichtquelle des Smartphones in Abhängigkeit einer speziellen, d.h. vorbestimmten bzw. vorbestimmbaren Uhrzeit, aktiviert werden. Falls beispielswiese eine vom Smartphone erfasste Uhrzeit einer Uhrzeit mit geringer Umgebungshelligkeit entspricht, kann die Lichtquelle des Smartphones, und somit die Beleuchtungseinrichtung, aktiviert werden. Dabei kann das Smartphone z.B. auf eine Wetter-Applikation zugreifen, um Information darüber zu erhalten, zu welcher Uhrzeit die Sonne auf- bzw. untergeht um zu bestimmen, welche Uhrzeiten mit einer geringen Umgebungshelligkeit einhergehen. In Abhängigkeit der von der Wetter-Applikation erfassten Daten kann dann die Lichtquelle des Smartphones entsprechend gesteuert werden.

Zudem oder alternativ dazu kann eine Leuchtintensität der Lichtquelle, und somit auch der Beleuchtungseinrichtung, in Abhängigkeit von der erfassten Uhrzeit gesteuert werden. So kann beispielsweise bei Morgen- und Abenddämmerung eine geringere Lichtintensität gewählt werden als bei vollkommener Dunkelheit. Dabei kann das Smartphone in Abhängigkeit von einer Wetter-Applikation erfassten Daten erfassen, welche Uhrzeiten einer Morgen-bzw. Abenddämmerung und welche Uhrzeiten einer sehr geringen Umgebungshelligkeit entsprechen. Dies hat den Vorteil, dass der Akkuverbrauch des Smartphones durch die geringere Leuchtintensität der Lichtquelle bei Morgen- und Abenddämmerung geringer ist als wenn stets dieselbe, volle Leuchtintensität verwendet würde.

Ein weiterer Vorteil der Verwendung eines Smartphones als externe Lichtquelle für die oben beschriebene Beleuchtungseinrichtung für ein Fahrrad liegt darin, dass bereits im Smartphone integrierte Funktionalitäten auch von einem Fahrradfahrer genutzt werden können.

So kann der Fahrradfahrer beispielsweise eine Navigations-App auch während jeder Fahrradfahrt verwenden. Ferner kann das Smartphone verwendet werden, um den Fahrer mit weiteren Fahrtendetails wie einer Fahrgeschwindigkeit, einer zurückgelegten Distanz, gefahrenen Höhenmetern, einem Kalorienerbrauch, einer maximalen Geschwindigkeit, einer Durchschnittsgeschwindigkeit etc. versorgen. Diese Funktionalitäten können in die Applikation zur Steuerung der Beleuchtungseinrichtung integriert werden. Ferner ist es denkbar, dass diese Funktionalitäten von anderen, bereits vorhandenen Applikationen, z.B. Runtastic, Runtastic Road Bike etc. bereitgestellt werden, währen die Applikation zur Steuerung der Beleuchtungseinrichtung diese im Hintergrund steuert.

## Patentansprüche

1. Beleuchtungseinrichtung (200, 500, 1120, 1210, 1310) für ein zumindest teilweise muskelbetriebenes Fahrzeug bzw. dessen Anhänger, umfassend:
zwei oder mehr Lichtführelemente (220, 210, 370, 450, 610, 630, 640, 710, 810, 910, 920, 930, 940, 1010, 1020, 1210, 1220, 1305, 1350, 1410); und
eine Montageeinrichtung (100, 210, 310, 350, 410, 440), welche geeignet ist, eine externe Lichtquelle (110, 240, 320, 360, 420) dergestalt aufzunehmen, dass das von der Lichtquelle (110, 240, 320, 360, 420) abgestrahlte Licht wenigstens teilweise in das Lichtführelement (220, 210, 370, 450, 610, 630, 640, 710, 810, 910, 920, 930, 940, 1010, 1020, 1210, 1220, 1305, 1350, 1410) eingespeist und derart aus dem Lichtführelement (220, 210, 370, 450, 610, 630, 640, 710, 810, 910, 920, 930, 940, 1010, 1020, 1210, 1220, 1305, 1350, 1410) austreten kann, dass das austretende Licht als Beleuchtung für das zumindest teilweise muskelbetriebene Fahrzeug bzw. dessen Anhänger dienen kann;
**dadurch gekennzeichnet, dass**
ein erstes Lichtführelement (930) als ein gebogenes, starres Lichtführelement (930) ausgebildet ist, und
ein zweites, biegsames Lichtführelement (940) über eine Aussparung (950) von dem gebogenen, starren Lichtführelement (930) derart aufgenommen ist, dass das in das gebogene Lichtführelement (930) zumindest teilweise eingespeiste bzw. eingekoppelte Licht zumindest teilweise in das zweite Lichtführelement (940) aufgenommen werden kann.

2. Beleuchtungseinrichtung (200, 500, 1120, 1210, 1310) gemäß Anspruch 1, wobei die Montageeinrichtung (100, 210, 310, 410) ein mobiles Endgerät bzw. Smartphone (110, 240, 320, 420) aufnimmt und eine in dem mobilen Endgerät bzw. Smartphone (110, 240, 320, 420) integrierte Lichtquelle als die externe Lichtquelle dient.

3. Beleuchtungseinrichtung (200, 500, 1120, 1210, 1310) gemäß Anspruch 2, wobei die Montageeinrichtung (100, 210, 310, 410) eine Öffnung (120, 250) aufweist, welche einer in das mobilen Endgerät bzw. Smartphone (110, 240, 320, 420) integrierten Lichtquelle entspricht,
wobei vorzugsweise bei der Öffnung (120, 250) eine Linse angebracht ist; und/oder
wobei vorzugsweise die Beleuchtungseinrichtung (200, 500, 1120, 1210, 1310) eine Hülse (530, 620, 720, 820, 1130, 1390) umfasst, welche unterhalb der Öffnung (120, 250) der Montageeinrichtung (100, 210, 310, 410) zu befestigen ist und dazu geeignet ist, das Lichtführelement (220, 210, 370, 450, 610, 630, 640, 710, 810, 910, 920, 930, 940, 1010, 1020, 1210, 1220, 1305, 1350, 1410) zumindest teilweise aufzunehmen.

4. Beleuchtungseinrichtung (200, 500, 1120, 1210, 1310) gemäß einem der vorangehenden Ansprüche, wobei das Lichtführelement (220, 210, 370, 450, 610, 630, 640, 710, 810, 910, 920, 930, 940, 1010, 1020, 1210, 1220, 1305, 1350, 1410) in einem Schwanenhals bzw. Flexarm (910, 1020, 1250, 1360, 1420) verlegt werden kann, so dass die Austrittsrichtung des aus dem Lichtführelement (220, 210, 370, 450, 610, 630, 640, 710, 810, 910, 920, 930, 940, 1010, 1020, 1210, 1220, 1305, 1350, 1410) austretenden Lichts durch Bewegung des Schwanenhalses bzw. Flexarmes (910, 1020, 1250, 1360, 1420) eingestellt werden kann.

5. Beleuchtungseinrichtung (200, 500, 1120, 1210, 1310) gemäß einem der vorangehenden Ansprüche, zudem umfassend:
wenigstens einen Strahlformungselement (230, 380, 520, 930, 1030, 1230, 1240, 1320, 1330, 1430), welches an dem Lichtführelement (220, 210, 370, 450, 610, 630, 640, 710, 810, 910, 920, 930, 940, 1010, 1020, 1210, 1220, 1305, 1350, 1410) angebracht werden kann, so dass das Strahlformungselement (230, 380, 520, 930, 1030, 1230, 1240, 1320, 1330, 1430) die Form und/oder Richtung des aus dem Lichtführelement (220, 210, 370, 450, 610, 630, 640,710, 810, 910, 920, 930, 940, 1010, 1020, 1210, 1220, 1305, 1350, 1410) austretenden Lichts einstellen, bevorzugt bündeln kann.

6. Beleuchtungseinrichtung (200, 500, 1120, 1210, 1310) gemäß einem der vorangehenden Ansprüche,
wobei vorzugsweise die Montageeinrichtung (100, 210, 310, 410) wasserdicht ist; und/oder
wobei vorzugsweise die Montageeinrichtung (100, 210, 310, 410) an einer Lenkvorrichtung des teilweise muskelbetriebenen Fahrzeuges zu befestigen ist.

7. Verfahren zur Steuerung einer Beleuchtungseinrichtung (200, 500, 1120, 1210, 1310) für ein zumindest teilweise muskelbetriebenes Fahrzeug bzw. dessen Anhänger, umfassend:
wenigstens ein Lichtführelement (220, 210, 370, 450, 610, 630, 640, 710, 810, 910, 920, 930, 940, 1010, 1020, 1210, 1220, 1305, 1350, 1410); und
eine Montageeinrichtung (100, 210, 310, 350, 410, 440), welche geeignet ist, eine externe Lichtquelle (110, 240, 320, 360, 420) dergestalt aufzunehmen, dass das von der Lichtquelle (110, 240, 320, 360, 420) abgestrahlte Licht wenigstens teilweise in das Lichtführelement (220, 210, 370, 450, 610, 630, 640, 710, 810, 910, 920, 930, 940, 1010, 1020, 1210, 1220, 1305, 1350, 1410) eingespeist und derart aus dem Lichtführelement (220, 210, 370, 450, 610, 630, 640, 710, 810, 910, 920, 930, 940, 1010, 1020, 1210, 1220, 1305, 1350, 1410) austreten kann, dass das austretende Licht als Beleuchtung für das zumindest teilweise muskelbetriebene Fahrzeug bzw. dessen Anhänger dienen kann, wobei die Montageeinrichtung (100, 210, 310, 410) ein mobiles Endgerät bzw. Smartphone (110, 240, 320, 420) aufnimmt und eine in dem mobilen Endgerät bzw. Smartphone (110, 240, 320, 420) integrierte Lichtquelle als die externe Lichtquelle dient;
wobei das Verfahren folgende Funktionen aufweist:
Erfassen von Beschleunigungsdaten mittels eines in ein mobiles Endgerät bzw. Smartphone (110, 240, 320, 420) integrierten Beschleunigungssensors, wobei das mobile Endgerät bzw. Smartphone (110, 240, 320, 420) von einer Montageeinrichtung (100, 210, 310, 410) der Beleuchtungseinrichtung (200, 500, 1120, 1210, 1310) aufgenommen ist;
Steuern bzw. Regeln der Beleuchtungseinrichtung (200, 500, 1120, 1210, 1310) in Abhängigkeit der Beschleunigungsdaten.

8. Verfahren gemäß Anspruch 7, wobei das Steuern bzw. Regeln der Beleuchtungseinrichtung (200, 500, 1120, 1210, 1310) folgende Funktionen beinhaltet:
falls eine für die Beschleunigung repräsentative Größe einen speziellen Schwellenwert überschreitet:
Aktivieren einer in dem mobilen Endgerät bzw. Smartphone (110, 240, 320, 420) integrierten Lichtquelle; und/oder
Aktivieren einer Blink- oder Stroboskopfrequenz der Lichtquelle.

9. Verfahren gemäß einem der Ansprüche 7 oder 8, welche zudem folgende Funktion aufweist:
Erfassen von GPS, Global Positioning System, für eine Position repräsentative Positionsdaten mittels eines in dem Endgerät bzw. Smartphone (110, 240, 320, 420) integrierten GPS-Sensors;
falls die erfasste Position einer speziellen, gefährlichen GPS-Position entspricht:
Aktivieren einer Blink- bzw. Stroboskopfrequenz der Lichtquelle; und/oder
Erfassen von Helligkeitsdaten mittels eines in das mobile Endgerät bzw. Smartphone (110, 240, 320, 420) integrierten Lichtsensors bzw. Photozelle; falls eine erfasste, für die Helligkeit repräsentative Größe einen speziellen Schwellenwert unterschreitet:
Aktivieren der Lichtquelle;
wobei vorzugsweise eine Ausstrahlungsstärke der aktivierten Lichtquelle in Abhängigkeit von neu erfassten Helligkeitsdaten automatisch geregelt wird.

10. Applikation zur Steuerung einer Beleuchtungseinrichtung (200, 500, 1120, 1210, 1310) für ein zumindest teilweise muskelbetriebenes Fahrzeug bzw. dessen Anhänger, umfassend:
wenigstens ein Lichtführelement (220, 210, 370, 450, 610, 630, 640, 710, 810, 910, 920, 930, 940, 1010, 1020, 1210, 1220, 1305, 1350, 1410); und
eine Montageeinrichtung (100, 210, 310, 350, 410, 440), welche geeignet ist, eine externe Lichtquelle (110, 240, 320, 360, 420) dergestalt aufzunehmen, dass das von der Lichtquelle (110, 240, 320, 360, 420) abgestrahlte Licht wenigstens teilweise in das Lichtführelement (220, 210, 370, 450, 610, 630, 640, 710, 810, 910, 920, 930, 940, 1010, 1020, 1210, 1220, 1305, 1350, 1410) eingespeist und derart aus dem Lichtführelement (220, 210, 370, 450, 610, 630, 640, 710, 810, 910, 920, 930, 940, 1010, 1020, 1210, 1220, 1305, 1350, 1410) austreten kann, dass das austretende Licht als Beleuchtung für das zumindest teilweise muskelbetriebene Fahrzeug bzw. dessen Anhänger dienen kann, wobei die Montageeinrichtung (100, 210, 310, 410) ein mobiles Endgerät bzw. Smartphone (110, 240, 320, 420) aufnimmt und eine in dem mobilen Endgerät bzw. Smartphone (110, 240, 320, 420) integrierte Lichtquelle als die externe Lichtquelle dient;
wobei die Applikation dazu ausgebildet ist, das mobiles Endgerät bzw. Smartphone (110, 240, 320, 420) zu veranlassen, ein Verfahren zur Steuerung einer Beleuchtungseinrichtung (200, 500, 1120, 1210, 1310) nach einem der Ansprüche 7 bis 9 zu implementieren.

## Claims

1. A lighting apparatus (200, 500, 1120, 1210, 1310) for an at least partially muscle-driven vehicle, or respectively its trailer, comprising:
two or more light guide elements (220, 210, 370, 450, 610, 630, 640, 710, 810, 910, 920, 930, 940, 1010, 1020, 1210, 1220, 1305, 1350, 1410); and
a mounting apparatus (100, 210, 310, 350, 410, 440) that is suitable to receive an external light source (110, 240, 320, 360, 420) such that the light emitted from the light source (110, 240, 320, 360, 420) is at least partially fed into the light guide element (220, 210, 370, 450, 610, 630, 640, 710, 810, 910, 920, 930, 940, 1010, 1020, 1210, 1220, 1305, 1350, 1410) and can exit the light guide element (220, 210, 370, 450,610, 630, 640, 710, 810, 910, 920, 930, 940, 1010, 1020, 1210, 1220, 1305, 1350, 1410) such that the exiting light can serve as lighting for the at least partially muscle-driven vehicle, or respectively its trailer;
**characterized in that**
a first light guide element (930) is designed as a curved, rigid light guide element (930), and
a second flexible light guide element (940) is received in a cutout (950) in the curved, rigid light guide element (930) such that the light at least partially fed, or respectively coupled into the curved light guide element (930) can at least partially be received into the second light guide element (940).

2. The lighting apparatus (200, 500, 1120, 1210, 1310) according to claim 1, wherein the mounting apparatus (100, 210, 310, 410) receives a mobile terminal, or respectively smart phone (110, 240, 320, 420), and a light source integrated in the mobile terminal, or respectively smart phone (110, 240, 320, 420) serves as the external light source.

3. The lighting apparatus (200, 500, 1120, 1210, 1310) according to claim 2, wherein the mounting apparatus (100, 210, 310, 410) has an opening (120, 250) that corresponds to a light source integrated in the mobile terminal, or respectively smart phone (110, 240, 320, 420),
wherein a lens is preferably attached in the opening (120, 250);
and/or
wherein the lighting apparatus (200, 500, 1120, 1210, 1310) preferably comprises a sleeve (530, 620, 720, 820, 1130, 1390) to be fastened below the opening (120, 250) in the mounting apparatus (100, 210, 310, 410) and is suitable to at least partially receive the light guide element (220, 210, 370, 450, 610, 630, 640, 710, 810, 910, 920, 930, 940, 1010, 1020, 1210, 1220, 1305, 1350, 1410).

4. The lighting apparatus (200, 500, 1120, 1210, 1310) according to one of the preceding claims, wherein the light guide element (220, 210, 370, 450, 610, 630, 640, 710, 810, 910, 920, 930, 940, 1010, 1020, 1210, 1220, 1305, 1350, 1410) can run in a gooseneck, or respectively flexible arm (910, 1020, 1250, 1360, 1420) so that the exit direction for the light exiting the light guide element (220, 210, 370, 450, 610, 630, 640, 710, 810, 910, 920, 930, 940, 1010, 1020, 1210, 1220, 1305, 1350, 1410) can be adjusted by moving the gooseneck or flexible arm (910, 1020, 1250, 1360, 1420).

5. The lighting apparatus (200, 500, 1120, 1210, 1310) according to one of the preceding claims, moreover comprising:
at least one beam shaping element (230, 380, 520, 930, 1030, 1230, 1240, 1320, 1330, 1430) that can be attached to the light guide element (220, 210, 370, 450, 610, 630, 640, 710, 810, 910, 920, 930, 940, 1010, 1020, 1210, 1220, 1305, 1350, 1410) so that the beam shaping element (230, 380, 520, 930, 1030, 1230, 1240, 1320, 1330, 1430) can adjust, preferably bundle, the shape and/or direction of the light exiting the light guide element (220, 210, 370, 450, 610, 630, 640, 710, 810, 910, 920, 930, 940, 1010, 1020, 1210, 1220, 1305, 1350, 1410).

6. The lighting apparatus (200, 500, 1120, 1210, 1310) according to one of the preceding claims,
wherein the mounting apparatus (100, 210, 310, 410) is preferably watertight; and/or
wherein the mounting apparatus (100, 210, 310, 410) is preferably to be fastened to a steering device of the partially muscle-driven vehicle.

7. A method for controlling a lighting apparatus (200, 500, 1120, 1210, 1310) for an at least partially muscle-driven vehicle, or respectively its trailer, comprising:
at least one light guide element (220, 210, 370, 450, 610, 630, 640, 710, 810, 910, 920, 930, 940, 1010, 1020, 1210, 1220, 1305, 1350, 1410); and
a mounting apparatus (100, 210, 310, 350, 410, 440) that is suitable to accommodate an external light source (110, 240, 320, 360, 420) such that the light emitted from the light source (110, 240, 320, 360,420) is at least partially fed into the light guide element (220, 210, 370, 450, 610, 630, 640, 710, 810, 910, 920, 930, 940, 1010, 1020, 1210, 1220, 1305, 1350, 1410) and can exit the light guide element (220, 210, 370, 450, 610, 630, 640, 710, 810, 910, 920, 930, 940, 1010, 1020, 1210, 1220, 1305, 1350, 1410) such that the exiting light can serve as lighting for the at least partially muscle-driven vehicle, or respectively its trailer; wherein the mounting apparatus (100, 210, 310, 410) receives a mobile terminal, or respectively smart phone (110, 240, 320, 420), and a light source integrated in the mobile terminal, or respectively smart phone (110, 240, 320, 420) serves as the external light source;
wherein the method has the following functions:
detecting acceleration data by means of an acceleration sensor integrated in a mobile terminal, or respectively smart phone (110, 240, 320, 420), wherein the mobile terminal, or respectively smart phone (110, 240, 320, 420) is received by a mounting apparatus (100, 210, 310, 410) of the lighting apparatus (200, 500, 1120, 1210, 1310); controlling, or respectively regulating the lighting apparatus (200, 500, 1120, 1210, 1310) depending on the acceleration data.

8. The method according to claim 7, wherein the controlling, or respectively regulating of the lighting apparatus (200, 500, 1120, 1210, 1310) includes the following functions: if a variable representative of the acceleration exceeds a special threshold value:
activating a light source integrated in the mobile terminal, or respectively smart phone (110, 240, 320, 420); and/or
activating a flashing or stroboscopic frequency of the light source.

9. The method according to one of claims 7 or 8, which also has the following function:
acquiring from a GPS (global positioning system) position data representative of a position by means of a GPS sensor integrated in the terminal, or respectively smart phone (110, 240, 320, 420);
if the acquired position corresponds to a special, hazardous GPS position:
activating a flashing or respectively stroboscopic frequency of the light source; and/or
acquiring brightness data by means of a light sensor, or respectively photocell integrated in the mobile terminal, or respectively smart phone (110, 240, 320, 420); if an acquired variable representative of the brightness falls below a special threshold value:
activating the light source;
wherein an emission strength of the activated light source is preferably automatically regulated depending on newly acquired brightness data.

10. An application for controlling a lighting apparatus (200, 500, 1120, 1210, 1310) for an at least partially muscle-driven vehicle, or respectively its trailer, comprising:
at least one light guide element (220, 210, 370, 450, 610, 630, 640, 710, 810, 910, 920, 930, 940, 1010, 1020, 1210, 1220, 1305, 1350, 1410); and
a mounting apparatus (100, 210, 310, 350, 410, 440) that is suitable to accommodate an external light source (110, 240, 320, 360, 420) such that the light emitted from the light source (110, 240, 320, 360, 420) is at least partially fed into the light guide element (220, 210, 370, 450, 610, 630, 640, 710, 810, 910, 920, 930, 940, 1010, 1020, 1210, 1220, 1305, 1350, 1410) and can exit the light guide element (220, 210, 370, 450, 610, 630, 640, 710, 810, 910, 920, 930, 940, 1010, 1020, 1210, 1220, 1305, 1350, 1410) such that the exiting light can serve as lighting for the at least partially muscle-driven vehicle, or respectively its trailer, wherein the mounting apparatus (100, 210, 310, 410) receives a mobile terminal, or respectively smart phone (110, 240, 320, 420), and a light source integrated in the mobile terminal, or respectively smart phone (110, 240, 320, 420) serves as the external light source;
wherein the application is designed to cause the mobile terminal, or respectively smart phone (110, 240, 320, 420) to implement a method to control a lighting apparatus (200, 500, 1120, 1210, 1310) according to one of claims 7 to 9.

## Revendications

1. Dispositif d'éclairage (200, 500, 1120, 1210, 1310) pour un véhicule propulsé au moins partiellement par la force musculaire ou sa remorque, comprenant :
deux éléments de guidage lumineux ou plus (220, 210, 370, 450, 610, 630, 640, 710, 810, 910, 920, 930, 940, 1010, 1020, 1210, 1220, 1305, 1350, 1410) ; et
un dispositif de montage (100, 210, 310, 350, 410, 440) qui convient à recevoir une source de lumière externe (110, 240, 320, 360, 420) de telle sorte que la lumière rayonnée par la source de lumière (110, 240, 320, 360, 420) est au moins partiellement alimentée dans l'élément de guidage lumineux (220, 210, 370, 450, 610, 630, 640, 710, 810, 910, 920, 930, 940, 1010, 1020, 1210, 1220, 1305, 1350, 1410) et peut sortir de l'élément de guidage lumineux (220, 210, 370, 450, 610, 630, 640, 710, 810, 910, 920, 930, 940, 1010, 1020, 1210, 1220, 1305, 1350, 1410) de telle sorte que la lumière sortante peut servir d'éclairage pour le véhicule propulsé au moins partiellement par la force musculaire ou sa remorque ;
**caractérisé en ce que**
un premier élément de guidage lumineux (930) est réalisé en tant qu'élément de guidage lumineux rigide courbé (930), et
un second élément de guidage lumineux flexible (940) est reçu par le biais d'un évidement (950) par l'élément de guidage lumineux rigide courbé (930) de telle sorte que la lumière alimentée ou injectée au moins partiellement dans l'élément de guidage lumineux courbé (930) peut être reçue au moins partiellement dans le second élément de guidage lumineux (940).

2. Dispositif d'éclairage (200, 500, 1120, 1210, 1310) selon la revendication 1,
dans lequel le dispositif de montage (100, 210, 310, 410) reçoit un terminal mobile ou smartphone (110, 240, 320, 420) et une source de lumière intégrée dans le terminal mobile ou smartphone (110, 240, 320, 420) sert de source de lumière externe.

3. Dispositif d'éclairage (200, 500, 1120, 1210, 1310) selon la revendication 2, dans lequel le dispositif de montage (100, 210, 310, 410) présente une ouverture (120, 250) qui correspond à une source de lumière intégrée dans le terminal mobile ou smartphone (110, 240, 320, 420),
dans lequel une lentille est de préférence montée au niveau de l'ouverture (120, 250) ; et/ou
dans lequel le dispositif d'éclairage (200, 500, 1120, 1210, 1310) comprend de préférence un manchon (530, 620, 720, 820, 1130, 1390) qui est à fixer en dessous de l'ouverture (120, 250) du dispositif de montage (100, 210, 310, 410) et convient à recevoir au moins partiellement l'élément de guidage lumineux (220, 210, 370, 450, 610, 630, 640, 710, 810, 910, 920, 930, 940, 1010, 1020, 1210, 1220, 1305, 1350, 1410).

4. Dispositif d'éclairage (200, 500, 1120, 1210, 1310) selon une des revendications précédentes, dans lequel l'élément de guidage lumineux (220, 210, 370, 450, 610, 630, 640, 710, 810, 910, 920, 930, 940, 1010, 1020, 1210, 1220, 1305, 1350, 1410) peut être posé dans un col de cygne ou bras flexible (910, 1020, 1250, 1360, 1420) de sorte que la direction de sortie de la lumière sortant de l'élément de guidage lumineux (220, 210, 370, 450, 610, 630, 640, 710, 810, 910, 920, 930, 940, 1010, 1020, 1210, 1220, 1305, 1350, 1410) peut être réglée par déplacement du col de cygne ou bras flexible (910, 1020, 1250, 1360, 1420).

5. Dispositif d'éclairage (200, 500, 1120, 1210, 1310) selon une des revendications précédentes, comprenant en outre :
au moins un élément de modelage de rayon (230, 380, 520, 930, 1030, 1230, 1240, 1320, 1330, 1430) qui peut être monté sur l'élément de guidage lumineux (220, 210, 370, 450, 610, 630, 640, 710, 810, 910, 920, 930, 940, 1010, 1020, 1210, 1220, 1305, 1350, 1410) de sorte que l'élément de modelage de rayon (230, 380, 520, 930, 1030, 1230, 1240, 1320, 1330, 1430) peut régler, de préférence concentrer, la forme et/ou direction de la lumière sortant de l'élément de guidage lumineux (220, 210, 370, 450, 610, 630, 640, 710, 810, 910, 920, 930, 940, 1010, 1020, 1210, 1220, 1305, 1350, 1410).

6. Dispositif d'éclairage (200, 500, 1120, 1210, 1310) selon une des revendications précédentes,
dans lequel le dispositif de montage (100, 210, 310, 410) est de préférence étanche à l'eau ; et/ou
dans lequel le dispositif de montage (100, 210, 310, 410) est de préférence à fixer à un dispositif de direction du véhicule propulsé partiellement par la force musculaire.

7. Procédé de commande d'un dispositif d'éclairage (200, 500, 1120, 1210, 1310) pour un véhicule propulsé au moins partiellement par la force musculaire ou sa remorque, comprenant :
au moins un élément de guidage lumineux (220, 210, 370, 450, 610, 630, 640, 710, 810, 910, 920, 930, 940, 1010, 1020, 1210, 1220, 1305, 1350, 1410) ; et
un dispositif de montage (100, 210, 310, 350, 410, 440) qui convient à recevoir une source de lumière externe (110, 240, 320, 360, 420) de telle sorte que la lumière rayonnée par la source de lumière (110, 240, 320, 360, 420) est au moins partiellement alimentée dans l'élément de guidage lumineux (220, 210, 370, 450, 610, 630, 640, 710, 810, 910, 920, 930, 940, 1010, 1020, 1210, 1220, 1305, 1350, 1410) et peut sortir de l'élément de guidage lumineux (220, 210, 370, 450, 610, 630, 640, 710, 810, 910, 920, 930, 940, 1010, 1020, 1210, 1220, 1305, 1350, 1410) de telle sorte que la lumière sortante peut servir d'éclairage pour le véhicule propulsé au moins partiellement par la force musculaire ou sa remorque, dans lequel le dispositif de montage (100, 210, 310, 410) reçoit un terminal mobile ou smartphone (110, 240, 320, 420) et une source de lumière intégrée dans le terminal mobile ou smartphone (110, 240, 320, 420) sert de source de lumière externe ;
dans lequel le procédé présente les fonctions suivantes :
détection de données d'accélération au moyen d'un capteur d'accélération intégré dans le terminal mobile ou smartphone (110, 240, 320, 420), dans lequel le terminal mobile ou smartphone (110, 240, 320, 420) est reçu par un dispositif de montage (100, 210, 310, 410) du dispositif d'éclairage (200, 500, 1120, 1210, 1310) ;
commande ou régulation du dispositif d'éclairage (200, 500, 1120, 1210, 1310) en fonction des données d'accélération.

8. Procédé selon la revendication 7, dans lequel la commande ou régulation du dispositif d'éclairage (200, 500, 1120, 1210, 1310) contient les fonctions suivantes :
au cas où une grandeur représentative de l'accélération dépasse une valeur seuil spéciale :
activation d'une source de lumière intégrée dans le terminal mobile ou smartphone (110, 240, 320, 420) ; et/ou
activation d'une fréquence clignotante ou stroboscopique de la source de lumière.

9. Procédé selon une des revendications 7 ou 8, qui présente en outre les fonctions suivantes :
détection de données de position GPS, Global Positioning System, représentatives d'une position au moyen d'un capteur GPS intégré dans le terminal mobile ou smartphone (110, 240, 320, 420) ;
au cas où la position détectée correspond à une position GPS spéciale dangereuse :
activation d'une fréquence clignotante ou stroboscopique de la source de lumière ; et/ou
détection de données de clarté au moyen d'un capteur lumineux ou d'une cellule photovoltaïque intégré(e) dans le terminal mobile ou smartphone (110, 240, 320, 420) ;
au cas où une grandeur détectée représentative de la clarté dépasse par le bas une valeur seuil spéciale :
activation de la source de lumière ;
dans lequel une intensité émissive de la source de lumière activée est de préférence automatiquement régulée en fonction de données de clarté nouvellement détectées.

10. Application pour la commande d'un dispositif d'éclairage (200, 500, 1120, 1210, 1310) pour un véhicule propulsé au moins partiellement par la force musculaire ou sa remorque, comprenant :
au moins un élément de guidage lumineux (220, 210, 370, 450, 610, 630, 640, 710, 810, 910, 920, 930, 940, 1010, 1020, 1210, 1220, 1305, 1350, 1410) ; et
un dispositif de montage (100, 210, 310, 350, 410, 440) qui convient à recevoir une source de lumière externe (110, 240, 320, 360, 420) de telle sorte que la lumière rayonnée par la source de lumière (110, 240, 320, 360, 420) est au moins partiellement alimentée dans l'élément de guidage lumineux (220, 210, 370, 450, 610, 630, 640, 710, 810, 910, 920, 930, 940, 1010, 1020, 1210, 1220, 1305, 1350, 1410) et peut sortir de l'élément de guidage lumineux (220, 210, 370, 450, 610, 630, 640, 710, 810, 910, 920, 930, 940, 1010, 1020, 1210, 1220, 1305, 1350, 1410) de telle sorte que la lumière sortante peut servir d'éclairage pour le véhicule propulsé au moins partiellement par la force musculaire ou sa remorque, dans laquelle le dispositif de montage (100, 210, 310, 410) reçoit un terminal mobile ou smartphone (110, 240, 320, 420) et une source de lumière intégrée dans le terminal mobile ou smartphone (110, 240, 320, 420) sert de source de lumière externe ;
dans laquelle l'application est réalisée pour inviter le terminal mobile ou smartphone (110, 240, 320, 420) à mettre en oeuvre un procédé de commande d'un dispositif d'éclairage (200, 500, 1120, 1210, 1310) selon une des revendications 7 à 9.
